# EUROPEAN PATENT APPLICATION

(11) **EP 4 603 419 A1**
(43) Date of publication of application: **20.08.2025**
(21) Application number: 25157958.7
(22) Date of filing: 14.02.2025
(51) Int. Cl.: B65G 1/04, B65G 47/91, B65G 61/00, B65G 1/02, B65G 49/05

(54) **A TILE LOADING/UNLOADING MACHINE AND A RELATIVE TILE STORAGE**

(30) Priority: 16.02.2024 IT 202400003307
(71) Applicant: Gruppo Tecnoferrari S.p.A., 41042 Fiorano Modenese (MO) (IT)
(72) Inventor: BARDI, Maurizio, 41043 FORMIGINE (MO) (IT)
(74) Representative: Dall'Olio, Christian

(57) **Abstract**

A tile loading/unloading machine (40) comprising:
a tile loading/unloading line (L);
a plurality of loading/unloading stations (41, 42, 43) on which a tile or a stack of tiles is destined to be temporarily arranged (resting), directly on a movable supporting platform (30) and which are vertically aligned to one another along a vertical stacking direction at a reciprocal distance that is non-zero; and
a transfer device (45) configured to operate the transfer of the tiles, preferably of one tile at a time, between the loading/unloading line (L) and any one from among the loading/unloading stations (41, 42, 43).

## Description

### TECHNICAL FIELD

The present invention relates to a tile loading/unloading machine, preferably, though not limitedly, onto/from movable supporting platforms or other temporary support platforms, including without a support and the relative tile storage system.

### PRIOR ART

As is known, in the ceramics sector it is common to temporarily store tiles coming from a production line on movable supporting platforms (also known as benches) or other temporary supports, such as support slabs made of metal or another material, including without a support, parking the movable supporting platforms full of tiles, or even single stacks of tiles and then newly collecting the temporarily parked tiles in order to unload them on a production line downstream of the first line. This is necessary in order to coordinate the various production lines that can have varying production rhythms, such as for example the enameling line and the firing line, the rectifying line and the selection line, or others besides.

The transfer between the parking zone of the movable supporting platforms and/or the stacks of tiles and the various lines is manually operated using fork lift vehicles or self-propelling carriers (AGV), which bring the various movable supporting platforms into proximity of loading/unloading machines taskedwith loading/unloading tiles onto or from the movable containers.

A tile loading/unloading machine of known type comprises:
a tile loading/unloading line (served by the production line upstream and/or downstream);
a first loading/unloading station in which a movable supporting platform can be temporarily arranged;
a second loading/unloading station, flanked to the first loading/unloading station along a horizontal flanking direction and in which a further movable supporting platform can be arranged; and
a transfer device configured to operate the transfer of the tiles between the loading/unloading line and at least one from the first loading/unloading station and the second loading/unloading station.

The known loading/unloading machine, in substance, functions according to the second diagram:
a self-propelling carrier is identified to pick up a full movable supporting platform of tiles to be temporarily parked and this is commanded to be brought into one from between the first and second station in which the full movable supporting platform to be collected is located and then to pick up the movable supporting platform.

The self-propelling carrier is then commanded to bring the collected movable supporting platform to the parking place designated for it.

At this point, the self-propelling carrier is commanded to pick up an empty or full movable supporting platform from the parking place and to bring it into one from between the first loading/unloading station and the second loading/unloading station, in order to be filled/emptied (according to the work processing needs).

Only when the second movable supporting platform has been brought to the respective loading/unloading station can the change cycle of the movable supporting platform be considered completed.

There also exist machines, or robotised islands with three benches, but these occupy more ground surface space with respect to those with two.

A known requirement in the sector is to increase the efficiency of the system, guaranteeing the continuity of functioning with a smaller possible number of necessary resources.

A further known need in the sector is to keep the warehouse as compact as possible and therefore, occupy the smallest area possible for these temporary parking areas (stores) of the tiles internally of the production facility.

### DISCLOSURE OF THE INVENTION

An aim of the present invention is to obviate this and other necessities of the prior art, with a solution that is simple, rational and inexpensive.

The aims are attained by the characteristics of the invention as reported in the independent claims. The dependent claims delineate preferred and/or particularly advantageous aspects of the invention.

In particular, the invention provides a tile loading/unloading machine which comprises:
- a tile loading/unloading line;
- a plurality of loading/unloading stations (for example 2 or 3 in number or even a number greater than 3) on which a tile, a tile plane or a stack of tiles is aimed at being temporarily arranged, directly or on a movable supporting platform, and which are vertically aligned to one another along a vertical stacking direction at a reciprocal distance that is non-zero; and
- a transfer device configured to operate the transfer of the tiles, preferably one tile or a tile plane (formed by a plurality of tiles horizontally flanked) at a time, between the loading/unloading line and any one from among the loading/unloading stations.

With this solution it is possible to obtain the aims as described in the foregoing in a simple and effective way.

In particular, it is possible to keep the machine as compact as possible and therefore occupying the smallest area possible internally of the production facility.

In fact, the vertical alignment of the loading/unloading stations is such as to reduce to a minimum the horizontal volume of the machine with a consequent optimisation of the spaces of the production or processing system of the tiles.

Further, in the case of machines with three or more benches, it is possible to reduce the number of runs of the AGV for carrying out the change of movable supporting platform from the loading/unloading machine and the times required for this change, while making available to the loading/unloading machine a movable supporting platform to be processed in any loading/unloading station.

The loading/unloading stations can advantageously be arranged at respective determined heights and, preferably, though not necessarily, are equidistant.

Also, the loading/unloading line can be flanked to the vertical stack of loading/unloading stations along a horizontal flanking direction, the transfer device comprising a movable pick up and transfer device at least along a horizontal direction parallel to the flanking direction and, optionally, at least along a vertical direction to be located vertically aligned in plan view selectively above the loading/unloading line and any one loading/unloading station.

Additionally, the horizontal flanking direction can be orthogonal to the sliding direction of the tiles on the loading/unloading line (L).

The transfer device can further comprise at least a pick up and transfer device having a suction cup or a suction plane for gripping/releasing a tile or a tile plane formed by a horizontally flanked plurality of tiles (separate to one another) in a square formation.

Advantageously, each movable supporting platform, where included - in combination with the machine - in order to support the tiles, can be constituted by a bench provided with ground-support feet and a loading plane arranged raised from the ground surface, preferably arranged at a top of the support feet, or by a support slab (for example made of metal or wood).

As mentioned, the movable supporting platform, might not be included or necessary; in which case the tile, the tile plane or stack of tiles is supported with no lower support.

In a case in which the movable supporting platform has support feet, each movable supporting platform can be supportable in any one of the loading/unloading stations by means of a support zone which is distinct and different to the support feet, preferably defined at a lower surface of the loading plane proximal to the support feet and located on the opposite side to the support feet with respect to the fork seats, for the transport by a fork carrier of the movable supporting platform.

The machine can also comprise a portal frame, to vertical uprights of which are rigidly attached: a plurality of shelves, each defining a respective loading/unloading station, wherein the shelves are vertically aligned with each other and placed at a non-zero distance from each other.

Further, the portal frame can be crossed along a crossing direction and has a first end facing the transfer device and/or the loading/unloading line and an opposite second end aligned with the first end along the flanking direction for access to any loading/unloading station of the plurality of loading/unloading stations).

Preferably, though not limitedly, the shelves (i.e. each thereof or any one thereof) can comprise, in proximity or at the free end thereof distal from the respective upright, a respective elevating body configured to define a raised rest for the movable supporting platform, preferably in such a way that the elevating body is the only part of the shelf in contact with the movable supporting platform exclusively at the support zone.

Also, any one of the loading/unloading stations or each of them can be openable/closable by means of a closing and protective element.

It is possible for any one from among the loading/unloading station, or each thereof, can be openable/closable or made accessible/unaccessible by means of a protection/control element such as photocells or the like.

For example, the closing and protective element can comprise at least a shutter, preferably sectional, configured to be switched between a closed position, in which it closes each loading/unloading station, and at least an open position in which it selectively opens at least one loading/unloading station of the plurality of loading/unloading stations.

Further, the closing and protective element can be arranged at/in proximity of the second end of the portal frame.

In a preferred aspect of the invention, the transfer device can be constituted by a Cartesian robot or an anthropomorphic robot.

A further aspect of the invention for the same purposes as mentioned in the foregoing provides a system (and a method) are provided for tile storage comprising:
a storage area configured to store a plurality of movable supporting platforms, each in a respective storage zone of the storage area;
a loading/unloading machine as described above, and
at least a self-propelling carrier configured to move at least within the storage area, in which the self-propelling carrier is configured to operate a transport of a tile or a tile plane (known as a square of tiles) or a stack of tiles, directly (for example without a support) or on a movable supporting platform, between a storage zone of the storage area and any one loading/unloading station of the machine.

According to another aspect of the invention, for the same purposes as mentioned in the foregoing provides a system (and a method) are provided for tile storage comprising:
at least a loading/unloading machine according to claim 1, and
at least a movable transfer unit which:
   in turn comprises fork means for raising a stack of tiles, directly or on a movable supporting platform, and for transporting the stack of tiles towards and from any loading/unloading station of the machine;
   is acting on an opposite side to the loading/unloading line with respect to the plurality of loading/unloading stations of the machine.

### BRIEF DESCRIPTION OF THE DRAWINGS

Further characteristics and advantages of the invention will emerge from a reading of the following description, provided by way of non-limiting example with the aid of the figures illustrated in the appended tables of drawings.
Figure 1 is a schematic plan view of a possible layout of a storage system according to the invention.
Figure 2 is an axonometric view from above of a movable supporting platform of the system according to the invention.
Figure 3 is an axonometric view from above of the movable supporting platform of figure 2, bearing a tile.
Figure 4 is a plan view from above of figure 2.
Figure 5 is a plan view from below of figure 2.
Figure 6 is a lateral elevation view of figure 2.
Figure 7 is a section view along section plane VII-VII of figure 4.
Figure 8 is a lateral elevation view of a second embodiment of a movable supporting platform according to the system of the invention.
Figure 9 is a plan view from above of a first embodiment of a loading/unloading machine according to the invention.
Figure 10 is a frontal elevation view of figure 9.
Figure 11 is a lateral elevation view of figure 9.
Figure 12 is a frontal elevation view of a variant of the first embodiment of loading/unloading machine according to the invention.
Figure 13 is a lateral elevation view of figure 12.
Figure 14 is a plan view from above of a second embodiment of a loading/unloading machine according to the invention.
Figure 15 is a frontal elevation view of figure 14.
Figure 16 is a lateral elevation view of figure 14.
Figure 17 is a plan view from above of a first variant of the second embodiment of a loading/unloading machine according to the invention (which differs from the layout of figure 14 in the arrangement of the transfer device).
Figure 18 is a lateral elevation view of figure 15.
Figure 19 is a plan view from above of a second variant of the second embodiment of a loading/unloading machine according to the invention (which differs from the layout of figure 14 and figure 17 in the arrangement of the transfer device).
Figure 20 is a lateral elevation view of figure 19.
Figure 21 is a frontal elevation view of a third variant of the second embodiment of the loading/unloading machine according to the invention.
Figure 22 is a lateral elevation view of figure 21.
Figure 23 is a frontal elevation view of a fourth variant of the second embodiment of the loading/unloading machine according to the invention (which differs from the layout of figure 21 in the arrangement of the transfer device).
Figure 24 is a frontal elevation view of a fifth variant of the second embodiment of the loading/unloading machine according to the invention (which differs from the layout of figure 21 and figure 23 in the arrangement of the transfer device).

### BEST WAY OF CARRYING OUT THE INVENTION

With particular reference to the figures of the drawings, reference numeral (10) denotes a tile storage system.

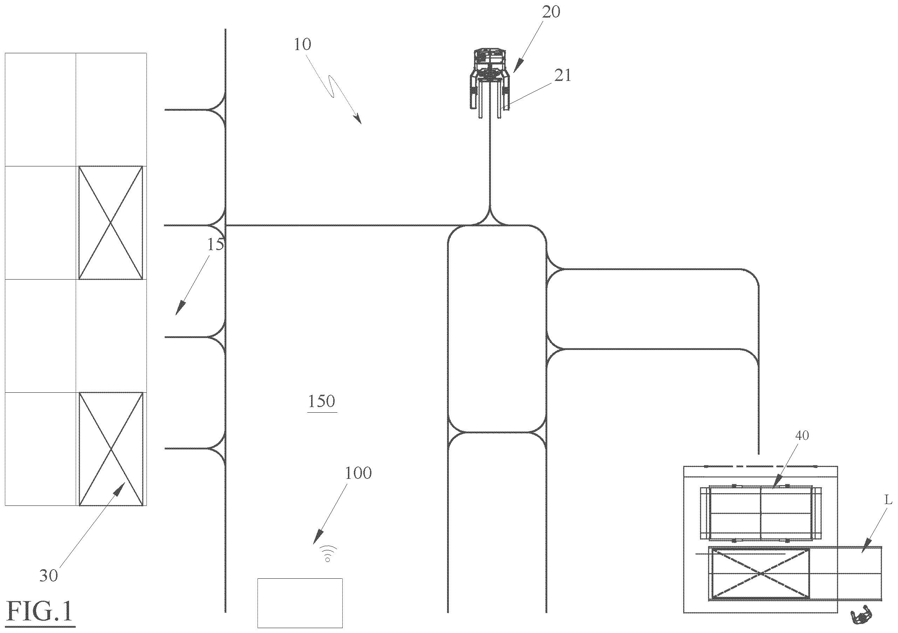

The system (10), as illustrated in figure 1, comprises a storage warehouse (15) for storing a plurality of tiles.

The storage warehouse (15) represents the fixed part of the system (10).

The storage warehouse (15) occupies a predetermined storage area, which can be vertically delimited inferiorly by a ground surface and, superiorly, by a possible covering.

The storage warehouse (15) further comprises also a loading/unloading area serving the storage space (i.e. having in common therewith the ground surface (150) and communicating therewith).

The storage space of the storage warehouse (15), i.e. the ground surface thereof, comprises at least a corridor (for example longitudinal), which is such as to allow the transport of the tiles internally of the storage area and, for example, is connected by service pathways to the loading/unloading area.

The storage area of the storage warehouse (15), i.e. the ground surface thereof, further comprises a plurality of storage zones (for example identical to one another) served by the (same) corridor.

The storage zones can be for example of virtual or re-assignable types, i.e. defined by a zone (preferably rectangular) of the ground surface. (free of any physical abutments or demarcations) a side of which, preferably one of the larger sides, faces on/is bordered by the corridor or, alternatively, the areas are real and fixed.

For example, in the storage zones (fixed) storage shelvings are arranged which can be:
- with shelves for depositing the tiles on (directly or by interposing movable supporting platforms, which will be more fully described in the following) transforming a stack with a single reference to a multi-reference zone in plan view;
- with longitudinal members/elevating bodies for depositing thereon the stacks of tiles or other products either with or without a lower support, directly on the longitudinal members.

Along the corridor, for example, are located a plurality of the storage zones, adjacent to one another (or possibly with the intervalled presence of a transversal corridor where necessary) and flanked with respect to the longitudinal direction of the corridor.

It is possible for the storage zones also to be arranged on two or more parallel rows, which are also parallel to the longitudinal direction of the corridor, in which a first row is proximal to the corridor and a second row is adjacent to the first row on the opposite side of the corridor.

The storage space of the storage warehouse (15), i.e. the ground surface thereof, can further comprise a plurality of corridors (for example parallel to one another).

Each corridor has one or more lanes, according to needs.

The system (10) further comprises a storage system, which represents the movable part of the system (10), i.e. movable internally of the storage warehouse (15).

The system (10), i.e. storage system, comprises one or more self-propelling carriers 20 (of which one is illustrated schematically in figure 1), tasked to transport a load moving internally of the storage warehouse (15) (for example internally of the storage space (alternatively) between the loading/unloading area and any storage zone) on the ground surface.

Each self-propelling carrier (20) is preferably a vehicle having an automated (or automatic) drive, driverless, i.e. an *Automated Guided Vehicle* (AGV).

In a possible alternative embodiment, each self-propelling carrier (20) can be defined as a fork-lift truck, for example of a manual type with an operator.

Further, the self-propelling carrier (20) is preferably a trackless vehicle, i.e. a vehicle which is not connected mechanically to any track that predetermines its path.

For example, the self-propelling carrier (20) is configured to be commanded to move by a contactless autonomous drive system.

For example, the guide system can be selected from a group constituted by: (for example) a magnetic system, an optic system, or laser system, a radio wave system, a GPS system or a combination of the above and/or a natural or environmental guide system.

For example, the guide system is configured to guide the movement of the self-propelling carrier (20) along each corridor and/or on any one of the storage zones of the storage warehouse 15 and/or in the loading/unloading area.

On the ground surface of the storage warehouse (15) there are preferably marked paths (virtual and/or contactless), for example defined by magnets in the case of magnetic systems, which guide the movement of the self-propelling carrier (20) along a pick-up and place trajectory, settable (on request), as well as guiding the arrangement thereof in stationing and/or manoeuvring areas.

The self-propelling carrier (20), in particular, can be of the type with forks, i.e. provided (a pair of) forks (21) for loading and moving loads.

The forks 21 of the self-propelling carrier (20) define a (movable) support plane substantially horizontal i.e. parallel to the ground surface) for temporary support (and transport) of loads.

The identified self-propelling carrier (20) further comprises an actuation system (managed automatically), which is configured to vary the height of the forks (21) with respect to the ground surface, i.e. for translating the forks (21) vertically.

For example, the actuation system is configured to activate the forks (21) (in the two directions) between a lowered position, in which the forks (21) are at a minimum height, and a raised position, in which the forks (21) are at a maximum height which is greater than the above-mentioned minimum height.

In other words, the forks 21 are movable (slidably) in a vertical direction. The system (10) preferably further comprises a plurality (or fleet) of self-propelling carriers (20) configured to move (also on the same path) in the same storage warehouse (15).

The storage system can also comprise (as well as the fork carriers) one or more self-propelling carriers (20) of the flat type, for example for the transfers between the various storage zones and/or other areas of the storage warehouse (15).

The system (10), i.e. storage system, described above (which defines the movable part of the system (10)) can further comprise a plurality of movable supporting platforms (30), which are configured to temporarily support one or more tiles (stacked and/or flanked to one another).

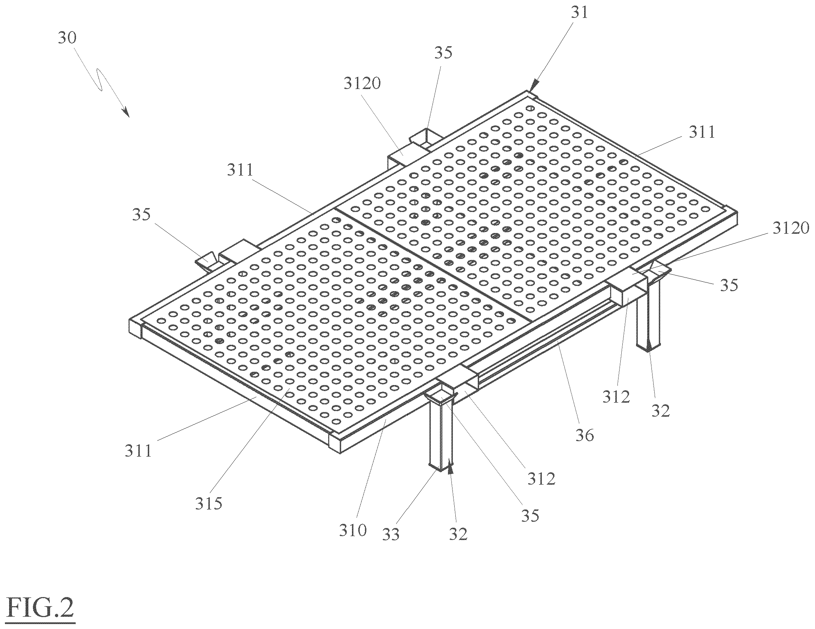

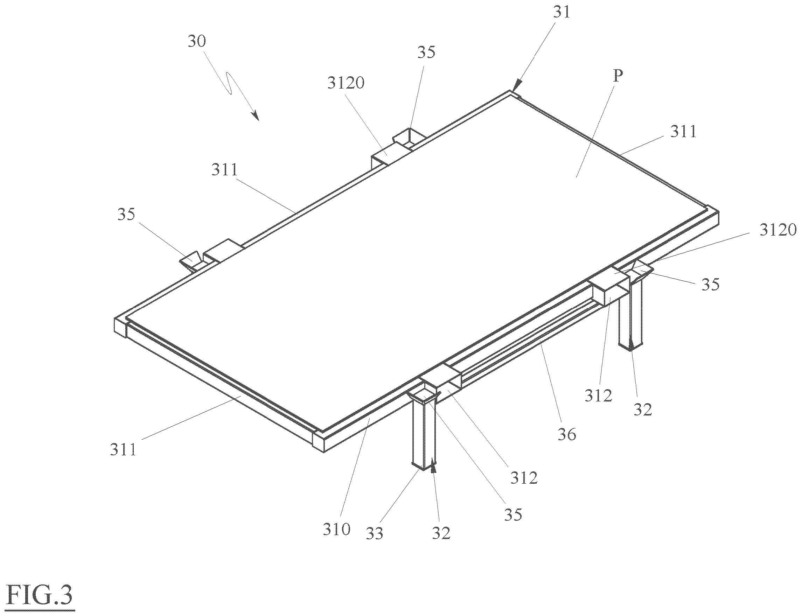

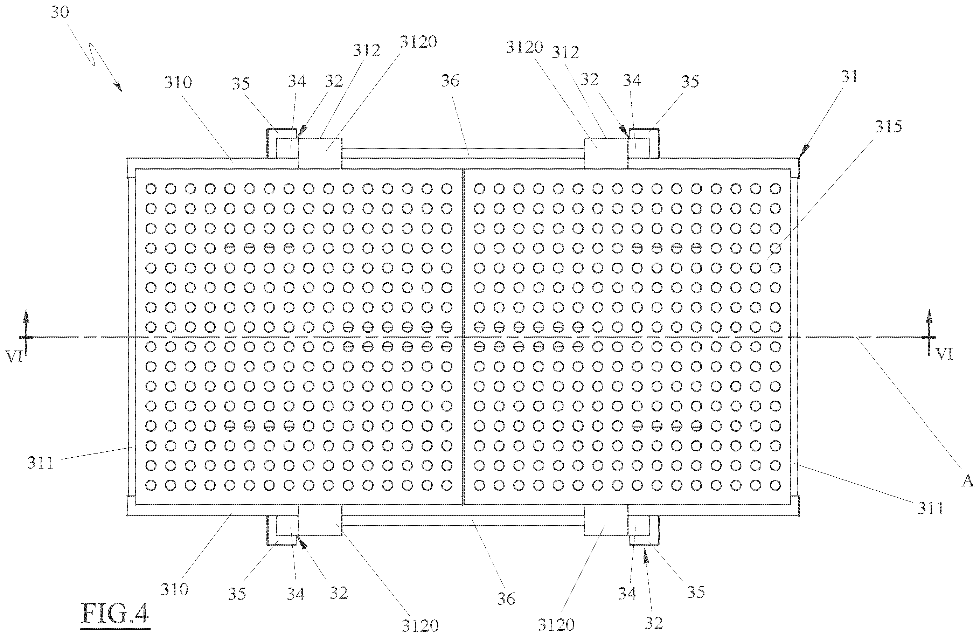

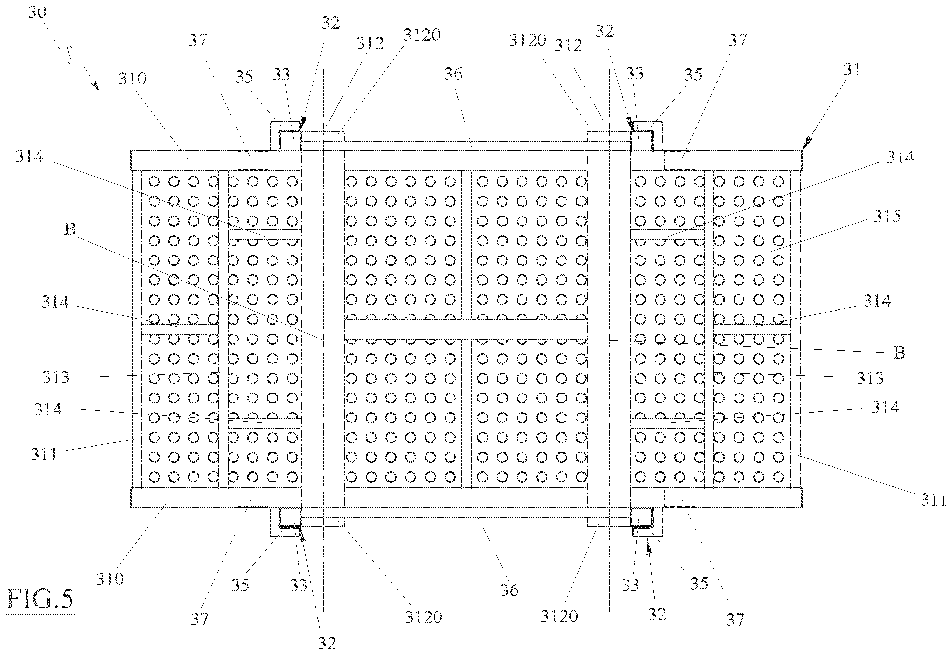

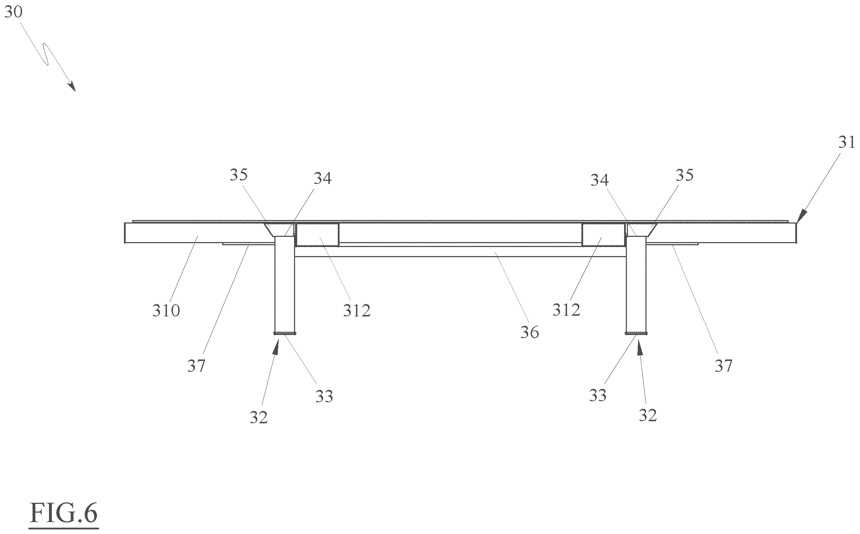

Each movable supporting platform (30), which is illustrated in detail in figures 2-8, is configured to be selectively located supported on the ground surface, i.e. on the ground surface of the storage warehouse (15), and, at least, on the self-propelling carrier (20), i.e. on the forks (21) thereof, and on temporary support shelves (which will be more fully described in the following), as well as stacked on another movable supporting platform (30).

Each movable supporting platform (30) can be placed in direct support on the ground surface of the storage warehouse (15) in any storage zone thereof, and removed therefrom.

In particular, the movable supporting platform (30) is free from any fixing member that can constrain it to the ground surface (150), with the exception of the support constraint defined by the ground surface itself.

Each movable supporting platform (30) can preferably be of the type described in the co-pending patent application belonging to the same Applicant, which is understood to be incorporated herein for reference.

Each movable supporting platform (30), or bench, is configured to restingly receive and support (elevated from the ground surface) a plurality of tiles (P) (ceramic) or slabs (preferably slabs of fragile material, such as ceramic slabs or glass slabs or the like) preferably, though not limitedly, stacked (vertically) one on another so as to form a stack of tiles (P).

The movable supporting platform (30) is configured to be supported on the ground surface, elevated and/or transported by means of appropriate carriers (fork lift trucks or flatbed trucks) and/or stacked on other movable supporting platforms (30) (identical) and/or rested (singly) on suitable shelves located in work stations/machines, as will be more fully explained in the following.

The movable supporting platform (30) comprises a (single) loading plane (31), horizontal, configured to supportingly receive a tile or a plurality of tiles, for example flanked horizontally with respect to one another or, preferably, stacked vertically to form a stack of tiles.

The loading plane (31) (in use arranged substantially horizontal) has a shape in plan view, for example quadrangular, that is preferably rectangular.

The loading plane (31) preferably has a horizontal longitudinal axis (A), and therefore has a prevalent length or dimension (defined by two long perimeter sides of the loading plane (31) parallel to one another) and a smaller width than the length (defined by two short perimeter sides, parallel to one another and orthogonal to the long sides of the loading plane (31)).

For example, the loading plane (31) has a modest thickness and a broadened plan shape.

The loading plane (31) is made up of a plurality of beams (for example interconnected to define a network of beams, as will be more fully described in the following).

Each of the beams, for example, is defined by a hollow profiled element (metal) obtained by extrusion.

Preferably, The loading plane (31) preferably comprises at least two larger beams (310) (or longitudinal) which are perimetral, parallel to the longitudinal axis (A) of the loading plane (31) and two smaller beams (311), perimetral, orthogonal to the larger beams (310) (and to the longitudinal axis A), wherein the larger beams (310) and the smaller beams (311) are fixed to one another rigidly at right angles (at the relative axial ends) to define a border (rectangular).

The larger beams (310) have for example a larger section than the section of the smaller beams (311).

For example, the larger beams (310) have a constant section over the whole length thereof.

The larger beams (310) are advantageously free of enlarged sections (central), with an anti-flex function of the loading plane (31).

Further, the movable supporting platform (30) and/or the loading plane (31) comprises a pair of fork seats (312) which can be forked by the forks of a (fork) carrier for transporting the movable supporting platform (30).

The fork seats (312) have a straight longitudinal extension along a longitudinal axis (B) thereof and are parallel to one another (and horizontal) and, preferably, orthogonal to the longitudinal axis (A) of the loading plane (31).

The fork seats 312 are advantageously parallel to the smaller beams 311 and are fixed, in proximity of the opposite axial ends thereof, to the larger beams (310) at right angles therewith.

Each fork seat (312) is defined by a (hollow) metal tube, open at least at an axial end thereof, preferably at each of the axial ends thereof, so as to be forked by a respective fork of the carrier.

The fork seats 312 preferably define a structural part of the loading plane (31), i.e. they substantially define two beams of the beamed structure which defines the loading plane (31).

Each fork seat (312) comprises: an upper wall (for contacting the upper wall of a fork); a pair of lateral containment walls that are parallel to one another and at right angles with the upper wall and, for example, a lower wall opposite (and parallel to) the upper wall, preferably at right angles with the containing walls.

For example, the upper wall of the fork seats (312) is coplanar to the upper walls of the larger beams (310) and/or the smaller beams (311).

Preferably, though not limitedly, the lower wall of the fork seats (312) is located at a level (slightly) lower than the lower walls of the larger beams (310) and/or the smaller beams (311) (although the vertical thickness of the fork seats (312) is slightly less than double the vertical thickness of the larger beams (310) and/or the smaller beams (311)).

The overall maximum (vertical) thickness of the loading plane (31) is defined, for example, by the (external) distance between the upper wall and the lower wall of the fork seats (312).

Each fork seat (312) advantageously has a greater length than the width (i.e. the dimension orthogonal to the longitudinal axis A) of the loading plane (31), i.e. the border defined by the assembly of the larger beams (310) and the smaller beams (311).

In practice, each fork seat (312) projects, by an (equal) predetermined projecting axial portion (3120) (which terminates with the opening of the free axial end), beyond the larger beam (310) to which it is fixed, for example at both axial ends thereof.

Each larger beam (310) is, in fact, defined by at least three portions (coaxial and aligned) of which:
- a central portion, interposed (along a direction parallel to the longitudinal axis (A)) between the two fork seats (312), which joins (at the head), for example by welding or another joining method, at the opposite axial ends thereof to (a lateral containment wall, internal of) a fork seat (312); and
- two opposite peripheral portions, each of which has an internal end joined (at the head), for example by welding or another joining method, to (a lateral containment wall, externally of) a proximal fork seat (312) and a (free) external end joined, for example by welding or another joining method, to an end of a proximal smaller beam (311).

In practice, between each peripheral portion of (each) larger beam (310) (and each central portion of larger beam (310)) and each projecting axial portion (3120) of (each) fork seat (312) a right angle is defined, the (vertical) corner of which is orthogonal to the upper surface of the fork seats (312) (and of the loading plane (31) in its entirety).

The loading plane (31) further comprises one or more reinforcing beams.

The loading plane (31) preferably comprises at least a central transversal reinforcing beam (313), preferably a plurality of transversal reinforcing beams, each parallel to the fork seats (312) (and therefore orthogonal to the longitudinal axis (A) of the loading plane (31)).

For example, the loading plane (31) comprises at least a pair of transversal reinforcing beams (313) external of the fork seats (312) which join (for example by welding or another joining method), at the axial ends thereof, to the larger beams (310) at the peripheral portions thereof.

Further, the loading plane (31) comprises at least a central transversal reinforcing beam (313), for example centred on the transversal median plane of the loading plane (31) orthogonal to the longitudinal axis (A), which joins (for example by welding or another joining method), at the axial ends thereof, to the larger beams (310) at the central portion thereof.

For example, the upper wall of the transversal reinforcing beams (313) (each of which or some of which) is coplanar to the upper walls of the larger beams (310) and/or of the smaller beams (311) (and the fork seats (312)).

Preferably, though not limitedly, the lower wall of the transversal reinforcing beams (313) (each of which or some of which) is coplanar to the lower walls of the larger beams (310) and/or the smaller beams (311) (and is located at a higher level than the lower wall of the fork seats (312)).

The loading plane (31) preferably also comprises at least a longitudinal reinforcing beam (314), preferably a plurality of transversal reinforcing beams, each parallel to the longitudinal axis (A) (i.e. to the larger beams (310)) and therefore orthogonal to the fork seats (312).

For example, the loading plane (31) comprises at least a central longitudinal reinforcing beam (314), for example centred on the longitudinal median plane of the loading plane (31) parallel to the vertical and longitudinal axis (A), which joins (for example by welding or another joining method), at the axial ends thereof, to the fork seats (312) at the median line thereof.

For example, the central transversal reinforcing beam (313) is subdivided into two axial trunks each of which has an external end joined as described above to a respective larger beam (310) at the central portion thereof, and an internal end joined (for example by welding or another joining method) to the central longitudinal reinforcing beam (314), at a median line thereof.

For example, the upper wall of the (only) central longitudinal reinforcing beam (314) is coplanar to the upper walls of the larger beams (310) and/or to the smaller beams (311) (and of the fork seats (312)).

Preferably, though not limitedly, the upper wall of the (only) central longitudinal reinforcing beam (314) is coplanar to the lower walls of the larger beams (310) and/or the smaller beams (311) (and is located at a higher level than the lower wall of the fork seats (312)).

Further, the loading plane (31) comprises at least a pair of external longitudinal reinforcing beams (314) of the fork seats (312).

For example, the loading plane (31) comprises at least a pair of first external longitudinal reinforcing beams (314) (for example on the above-mentioned longitudinal median plane) which join (for example by welding or another joining method), at the axial ends thereof, respectively to a smaller beam (311) and to a peripheral transversal reinforcing beam (313), for example at a central section thereof.

The loading plane (31) also comprises at least a pair of second external longitudinal reinforcing beams (314), for example two pairs of second longitudinal reinforcing beams (wherein each pair of second longitudinal reinforcing beams has two second longitudinal reinforcing beams that are symmetrical and distanced with respect to the above-mentioned longitudinal median plane) which join (for example by welding or another joining method), at the axial ends thereof, respectively, to a peripheral transversal reinforcing beam (313) and a (proximal fork seat (312).

For example, the upper wall of the external longitudinal reinforcing beams (314) is not coplanar to the upper walls of the larger beams (310) and/or of the smaller beams (311) (and of the fork seats (312)), but is located at a lower level with respect to the upper walls of the larger beams (310) and/or of the smaller beams (311) (and of the fork seats (312)) and above the lower walls of the larger beams (310) and/or of the smaller beams (311) (and of the fork seats (312)).

Preferably, though not limitedly, the lower wall of the external longitudinal reinforcing beams (314) is not coplanar to the lower walls of the larger beams (310) and/or of the smaller beams (311) (and of the fork seats (312)), but is at a higher level (for example as can be observed for the second longitudinal reinforcing beams (314)) or lower (for example as can be observed for the first longitudinal reinforcing beams (314)) with respect to the lower walls of the larger beams (310) and/or the smaller beams (311) and in any case, lower than the upper walls of the larger beams (310) and/or the smaller beams (311) (and/or above the lower walls of the fork seats (312)).

Advantageously, though not limitedly, the (coplanar) upper surface of the fork seats (312, of the smaller cross members (311), of the larger cross-members (310) (and of the transversal reinforcing cross members (313), as well as the central reinforcing cross member (314)) overall defines a support surface (direct or indirect) for the tiles (P) (i.e. for the tile (P) at the base of the stack of tiles (P)).

It is possible to provide, as in the illustrated case, that the loading plane (31) comprises a support plate (315 (or a plurality of flanked support plates (315)), for example perforated, which rests (and is rigidly fixed, for example by welding or another joining method) on the above-mentioned support surface defined by the (coplanar) upper surface of the fork seats (312), of the smaller cross members (311), of the larger cross-members (310) (and of the transversal reinforcing cross members (313), as well as the central reinforcing cross member (314)), on which support plate (315) the tiles (P) are aimed at being supported (directly/in contact) (i.e. for the tile (P) at the base of the stack of tiles (P)).

The support plate (315) and/or the support plates (315) are snugly inscribed internally of the border defined by the smaller beams (311) and the larger beams (310).

The movable supporting platform (30) further comprises a plurality of support feet (32) configured to support the loading plane (31) (and the load bearing thereon) and, for example, at least for keeping the loading plane (31) elevated from the ground (at a non-zero distance therefrom) or from another support surface.

The movable supporting platform (30) preferably comprises (exclusively) four (identical) support feet (32), i.e. two pairs of support feet (32) wherein the support feet of each pair of support feet (32) are aligned along a direction parallel to the fork seats (312) and the pairs of support feet (32) are aligned along the longitudinal axis (A) of the loading plane (31) (and equidistant/symmetrical with respect to the transversal vertical median plane of the loading plane (31).

The support feet (32) are rigid, i.e. are undeformable (in terms of compression and/or flexion and/or torsion) under the normal stresses to which the movable supporting platform (30) is subjected in use (i.e. under the load of the maximum stack of tiles admissible, which is sustainable by means of the movable supporting platform (30)).

For example, the support feet (32) are arranged so as to be at the corners of a quadrilateral, for example, a rectangle or a square, the crossing of the diagonals whereof substantially coincides with the crossing of the diagonals of the quadrilateral defined by (the border delimited by) the larger beams (310) and the smaller beams (311).

In a first embodiment illustrated in figures 2-7, the support feet (32) are arranged externally with respect to the two fork seats (312) along a direction parallel to the longitudinal axis (A).

In other words, the fork seats (312) are internal of the two pairs of support feet (32) aligned along the longitudinal axis (A).

In practice (the vertical projections of) the fork seats (312) intersect the imaginary quadrilateral defined by the four support feet (32).

The support feet (32) are rigidly fixed (for example by welding or another joining method) to the loading plane (31), as will be more fully explained in the following.

The support feet (32), for example, are disaligned in plan view with respect to the loading plane (31), i.e. are arranged externally of the defined border defined by the smaller beams (311) and the larger beams (310) of the loading plane (31).

Each support foot (32) has a longitudinal extension (prevalent) that is substantially vertical (in use), i.e. substantially orthogonal to the support surface defined by the loading plane (31).

Each support foot (32) has a lower end (33) (support end) arranged distal from the loading plane (31) and an opposite upper end (34) arranged proximal to the loading plane (31).

Each support foot (32) is preferably fixed to the loading plane (31) at the upper end (34) thereof.

For example, each support foot (32) is defined by a prismatic longitudinal member (having a quadrangular base, preferably square), the top wall of which (closed) defines the upper end (34) and the base wall of which (also closed, for example) defines the lower end (33).

The upper end (34) of each support foot (32) (which are located at the same level/are coplanar) is preferably at a level such as to be arranged below or, at most, is coplanar with the upper surface of the loading plane (31), i.e. to the support surface defined thereby.

The upper end (34) of each support foot (32) is preferably at a level such as to be comprised internally of the thickness of the loading plane (31), preferably proximal to the lower surface thereof (i.e. at a higher level than the lower wall of the fork seats (312) and/or of the larger beams (310) and the lower beams (311).

At least one from between the upper end (34) and the lower end (33) of each support foot (32) comprises a coupling profile configured to receive/couple with the other with the other of the lower end (33) and upper end (34) (possibly comprising a complementary coupling profile) of a further movable supporting platform (30), facilitating/allowing the vertical stackability thereof on the support feet (32) thereof.

In the example, (only) the upper end (34) of each support foot (32) comprises a coupling profile, which is configured to receive/couple (directly) with the lower end (33) of a corresponding support foot (32) of a further movable supporting platform (30).

In the example, the coupling profile comprises a concave seat (35), for example having a substantially truncopyramidal or truncoconical (hollow) shape rising from the upper end (33 (i.e. from the top wall) of the respective support foot (32).

The seat (35) converges (towards the central longitudinal axis of the support foot (32)) from the upper end thereof towards the lower end, which for example coincides with the top wall of the support foot (32) (which defines the smaller lower base of the truncopyramidal seat (35).

The upper larger base of the seat (35) is open so as to be able to receive, for the axial insertion (vertical) of the lower end of a corresponding support foot (32) of a further movable supporting platform (30) (when these are vertically stacked on one another).

The walls converging (towards the central longitudinal axis of the support foot (32)) downwards towards the seat (35) define a centring ramp (converging towards the central vertical axis of the support foot (32)) for the lower end of the support foot (32) of the further movable supporting platform (30) (when these are vertically stacked on one another).

The upper free end of each coupling profile, i.e. the larger base of each seat (35) (which are located at the same level/are coplanar) is preferably located at a level so as to be inferiorly arranged or, at most, is coplanar with the upper surface of the loading plane (31), i.e. to the support surface defined thereby.

The upper free end of each coupling profile, i.e. the larger base of each seat (35) (which are reciprocally placed at a same level/are coplanar) is preferably located at a level such as to be comprised internally of the thickness of the loading plane (31), preferably proximal to the upper surface (i.e. near or at most coplanar to the support surface defined by the upper wall of the fork seats (312) and at least the upper walls of the larger beams (310) and the smaller beams (311)).

It is not excluded that the coupling profile can be of a different type with respect to what is described and illustrated in the foregoing, such as for example each support foot (32) can be provided, at the upper end (34) thereof, with a pin, for example truncoconical or truncopyramidal (rising from the top wall of the support foot (32), configured to couple with a seat (complementary) realised recessed in the support foot (32) at a lower end (33) of a support foot (32) of a further (identical) movable supporting platform (30).

When two movable supporting platforms (30) are vertically stacked, further, they are such as to maintain the two loading planes (31) at a non-zero distance, i.e. upper surface of the loading plane (31) of the lower movable supporting platform (30) is at a non-zero distance from the lower surface of the loading plane of the upper movable supporting platform (30). The non-zero distance is substantially equal to the height of the support feet (32).

In this case too, the upper free end of each coupling profile, i.e. the top of the pin, (which are reciprocally placed at a same level/coplanar) is located at a height that is such as to be comprised internally of the thickness of the loading plane (31), preferably proximal to the upper surface thereof (i.e. near or at most coplanar to the support surface defined by the upper wall of the fork seats (312) and at least the upper walls of the larger beams (310) and the smaller beams (311)).

In practice, no part of each support foot (32) (not even the coupling profile located at the upper end (34) thereof) projects (superiorly) beyond the support surface of the loading plane (31) defined by the upper wall of the fork seats (312) and at least the upper walls of the larger beams (310) and the smaller beams (311).

Further, the movable supporting platform (30) is free of any reinforcing structure (anti-flex of the loading plane (31)), for example such as arched or bridge beams, which is arranged superiorly to the support surface of the loading plane (31) which, for example, is defined by the upper wall of the fork seats (312) and at least the upper walls of the larger beams (310) and the smaller beams (311).

The movable supporting platform (30) advantageously comprises two auxiliary longitudinal reinforcing cross-members (36) (parallel to one another), which extend longitudinally in a parallel direction to the longitudinal axis (A) of the loading plane (31) and connect two support feet (32) (aligned along the same direction parallel to the longitudinal axis (A) of the loading plane (31)).

The cross members (36) can also be replicated in a parallel direction to the longitudinal axis (B) of the seats for the fork (312).

For example, each of the longitudinal reinforcing cross-members (36) has the opposite ends thereof rigidly fixed (for example by welding or another joining method) to the two support feet (32) which it connects.

In the example, the upper surface of the longitudinal reinforcing cross-members (36) is in contact with/rigidly fixed to (for example by welding or another joining method) the lower wall of the fork seats (312).

Preferably, in the first embodiment, each pair of support feet (32), wherein the support feet of the pair of support feet (32) are aligned along an alignment direction parallel to a longitudinal axis of the fork seats (312), i.e. orthogonal to the longitudinal axis (A) of the loading plane (31), is arranged adjacent (externally thereof) to a respective fork seat (312) (i.e. to the proximal fork seat (312) and substantially in contact therewith) along a flanking direction parallel to the loading plane and orthogonal to the longitudinal axis of the fork seats (312), i.e. parallel to the longitudinal axis (A) of the loading plane (31).

In the preferred illustrated example, each support foot 32 is contiguous (and in contact) with a respective (proximal) fork seat (312), i.e. with the outer side wall thereof, preferably at a respective projecting axial portion (3120) of the fork seat (312).

Each support foot (32) is preferably rigidly fixed (for example by welding or another joining method), at the upper end (34) thereof, to a projecting axial portion (3120) of a proximal fork seat (312).

For example, each support foot (32) is inserted internally of the above-mentioned right angle defined between the outer side wall of the projecting axial portion (3120) of a fork seat (312) and the peripheral portion of the larger beam (310), with a vertical corner substantially coinciding with the corner of the right-angle (and rigidly fixed thereto).

In this circumstance, the seat (35) (defining the coupling profile at the upper end (34) of each support foot (32) is realised by two countersunk walls which extend from the support foot (32 and the opposite two walls of the seat (35) are defined by a free portion of the projecting axial portion (3120) of a fork seat (312 and a further free portion of peripheral portion of the larger beam (310) (which define the above-mentioned right angle).

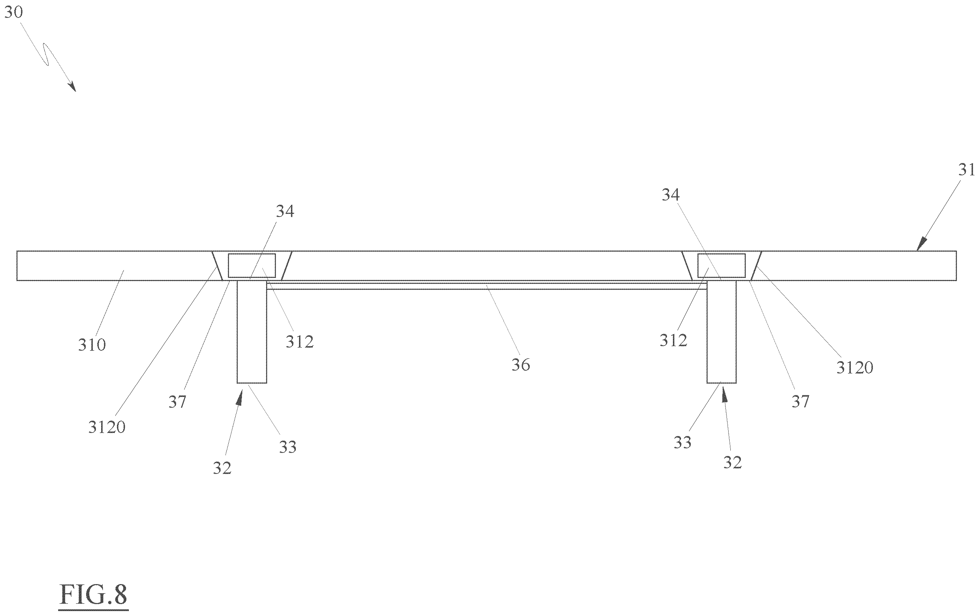

In a second embodiment visible in figure 8, the support feet (32) are arranged, at least partially, or totally, as in the illustrated example, aligned in plan view with respect to the two fork seats (312) or to an axial extension (real or virtual) thereof.

For example, each flanked pair of support feet (32) with respect to a flanking direction parallel to the longitudinal axis (B) of the proximal fork seat (312) is arranged so as to be, at least partially, or totally, arranged below the proximal fork seat (312) or beneath an axial extension of the fork seat (312), for example at right angles thereto.

In other words, the support feet (32) originate from the lower wall of the fork seats (312) (and extend vertically/orthogonally with respect thereto).

In practice, the vertical projection of each of the fork seats (312) contains the vertical projection of a pair of support feet (32) aligned along the alignment direction parallel to the longitudinal axis of the respective fork seat (312).

The support feet (32) are preferably centred on the fork seats (312), i.e. the longitudinal vertical median plane of each fork seat (312), parallel to the longitudinal axis thereof, coincides with a median plane of each of the support feet (32) aligned along the alignment direction parallel to the longitudinal axis of the fork seat (312).

For example, the width of each support foot 32 is smaller than the width of each fork seat (312).

The support feet (32) are rigidly fixed (for example by welding or another joining method) to the loading plane (31), as will be more fully explained in the following, in particular to the relative (lower wall of the) fork seat (312).

The support feet (32), for example, are disaligned in plan view with respect to the loading plane (31), i.e. are arranged externally of the border defined by the smaller beams (311) and the larger beams (310) of the loading plane (31).

Each support foot (32) advantageously originates beneath a respective projecting axial portion (3120) of the fork seat (312) (at right angles and aligned in plan view therewith).

Each support foot (32) has a longitudinal extension (prevalent) that is substantially vertical (in use), i.e. substantially orthogonal to the support surface defined by the loading plane (31).

Each support foot (32) has a lower end (33) (support end) arranged distal from the loading plane (31) and an opposite upper end (34) arranged proximal to the loading plane (31).

Each support foot (32) is preferably fixed to the loading plane (31) (i.e. to the lower wall of the respective fork seat 312, in greater detail, of the projecting axial portion (3120) of the fork seat (312)) at the upper end (34) thereof.

For example, each support foot (32) is rigidly fixed (for example by welding or another joining method), at the upper end (34) thereof, to the lower wall of a projecting axial portion (3120) of a respective fork seat (312).

In fact, the upper end (34) of each support foot (32) coincides with or is fixed to the lower wall of a projecting axial portion (3120) of a respective fork seat (312).

For example, each support foot (32) is defined by a prismatic longitudinal member (having a quadrangular base, preferably square), the top wall of which (closed) defines the upper end (34) and the base wall of which (also closed, for example) defines the lower end (33).

The upper end (34) of each support foot (32) (which are located at the same level/are coplanar) is preferably at a level such as to be arranged below that is such as to be arranged below the support surface defined thereby.

The upper end (34) of each support foot (32) is preferably located at a level such as to be lower than the fork seats (312) (or are coplanar/coincidental with the lower wall thereof).

No part of the support feet (32) projects superiorly of the loading plane (31).

The movable supporting platform (30) advantageously comprises a profile/group of coupling profiles configured to allow/stabilise the stacking of two or more movable support platforms (30) one on another.

In the second embodiment, each projecting axial portion (3120) of each fork seat (312) comprises a coupling profile, for example defined by a profiled cavity or by a profiled recess or by a pair of lateral walls diverging upwards, which is configured to couple to a (complementary) lower end (33) of a support foot (32) of a further movable supporting platform (30), facilitating/allowing the vertical stackability thereof on the support feet (32) thereof.

In the example, each projecting axial portion (3120) of each fork seat (312) comprises a hole or opening at the upper wall thereof so as to allow insertion from above (of the lower end (33)) of a support foot (32) and defining, for example with the lateral walls thereof, a coupling profile, which is configured to receive/couple (directly) with the lower end (33) of a corresponding support foot (32) of a further movable supporting platform (30).

The support foot (32) of the upper movable supporting platform (30), by inserting from above into the opening made in the upper wall of the projecting axial portion (3120) of the fork seat (312), goes to rest on the internal lower wall of the projecting axial portion (3120) which, in fact, coincides with or is fixed superiorly to the upper end (34) of the support foot (34) of the movable supporting platform (30) immediately below.

In this case too, no part of each support foot (32) (neither the coupling profile located at the upper wall of the projecting axial portion (3120) of the fork seat (312) nor in the lateral walls thereof) projects (superiorly) beyond the support surface of the loading plane (31) defined by the upper wall of the fork seats (312) and at least the upper walls of the larger beams (310) and the smaller beams (311)).

Further, the movable supporting platform (30) is free of any reinforcing structure (anti-flex of the loading plane (31)), for example such as arched or bridge beams, which is arranged superiorly to the support surface of the loading plane (31) which, for example, is defined by the upper wall of the fork seats (312) and at least the upper walls of the larger beams (310) and the smaller beams (311).

The movable supporting platform (30) advantageously comprises two auxiliary longitudinal reinforcing cross-members (36) (parallel to one another), which extend longitudinally in a parallel direction to the longitudinal axis (A) of the loading plane (31) and connect two support feet (32) (aligned along the same direction parallel to the longitudinal axis (A) of the loading plane (31))

For example, each of the longitudinal reinforcing cross-members (36) has the opposite ends thereof rigidly fixed (for example by welding or another joining method) to the two support feet (32) which it connects.

In the example, the upper surface of the longitudinal reinforcing cross-members (36) is in contact with/rigidly fixed to (for example by welding or another joining method) the lower wall of the fork seats (312), though this embodiment is not strictly constraining.

The loading plane (31) is conformed in such a way as to be deformable in flexion, in a controlled way, about a (single) axis of curvature (continuous) parallel to the longitudinal axes of the fork seats (312) (when subjected to a load - static and preferably uniformly distributed - bearing on the support surface of the support plane).

When the loading plane (31) is relieved of the weight it has an undeformed configuration that is substantially planar, i.e. in which the support surface thereof is substantially planar (and horizontal).

The loading plane (31) has a first predetermined flexional rigidity/resistance with respect to a flexion stress such as to produce a flexion moment that is parallel to the longitudinal axis (B) of the fork seats (i.e. orthogonal to the longitudinal axis (A) of the loading plane (31)) and for example a second pretermined flexional rigidity/resistance with respect to a flexion stress so as to produce a moment that is parallel to the longitudinal axis (B) of the loading plane (31), wherein the first predetermined flexional rigidity/resistance is smaller than the second pretermined flexional rigidity/resistance.

In practice, the loading plane (31) is configured to flex prevalently (or exclusively) following a flexion stress such as to produce a flexion moment that is parallel to the longitudinal axis (B) of the fork seats (i.e. orthogonal to the longitudinal axis (A) of the loading plane (31)).

The first predetermined flexional rigidity/resistance of the loading plane (31) is dimensioned in such a way as to allow the loading plane (31) to bend (elastically) about a (single) axis of curvature (continuous) parallel to the longitudinal axes of the fork seats (312).

In practice, the loading plane (31) is configured to deform (elastically) - during the (single) flexion - with an arc-shaped deformation (or parabola), with a concavity facing downwards (or upwards) and having a continuous curvature (i.e. a curve without flex points or breaks), wherein the continuous curvature has a maximum or minimum point (or rather a maximum or minimum line parallel to the axis of curvature as mentioned above) substantially at a transversal vertical median plane of the loading plane (31) equidistant from and parallel to the fork seats (312).

This continuous curvature is symmetrical with respect to the transversal vertical median plane (parallel to the longitudinal axes (B) of the fork seats 312) of the loading plane (31).

The amplitude of the curvature (or of the overturned parabola) of the loading plane (31) is at least partially defined (as well as by the position of the constraint means acting on the loading plane (31), as will be described in the following) by the flexional rigidity/resistance of the loading plane (31).

The (four) support feet (32) and the (two) fork seats (312) are preferably arranged (in plan view), as described above (i.e. with the pairs of support feet (32) proximal to and/or in contact/superposed with the proximal fork seats (312)), so that when a load is bearing on the loading plane (31) (uniformly distributed on a larger part of the support surface thereof and with the centre of gravity lying on the transversal median plane as defined above) - such as the load defined by at least one tile (P) or a stack of tiles (P) and, at the same time, the movable supporting platform (30) is supported on the support feet (32) and/or on the fork seats (312) (for example by dint of the elevating due to the forking of the carrier forks), the loading plane (31) is deformable in flexion with an arc-shaped deformation (or parabola) with the concavity facing downwards (or upwards) and having a single continuous curvature, wherein the curvature has a maximum point (or a minimum point) substantially at a transversal vertical median plane of the loading plane (31) equidistant from and parallel to the fork seats.

Advantageously, given the proximity of the constraint means (alternatively defined by the support feet (32) and by the fork seats (312)), the curvature of the loading plane (31) is advantageously substantially the same or alike when it is resting on the support feet (32) with respect to when it is supported at the fork seats (312) (elevated from the support feet (32) and received by the forks of a carrier).

In this context, "substantially equal" is taken to mean that the continuous curvature is the same as or differs when rested on the support feet (32) with respect to when it is supported at the fork seats (312) possibly only due to the opening (of the parabola), wherein when the loading plane (31) is supported at the fork seats (312) it has a minimum opening and when it is supported at the support feet (32) it has a greater opening than when at the minimum opening.

In determined work steps, the movable supporting platform (30) can be temporarily arranged temporarily resting on shelves (one or more pairs of shelves facing and substantially arranged symmetrically with respect to the transversal vertical median plane of the loading plane (31)) of a work station/machine, such as for example a tile loading/unloading machine onto or from the movable supporting platform (30).

The loading plane (31) comprises further constraint means selectively engageable with respect to those described in the foregoing.

In particular, the loading plane (31) preferably comprises a pair of support zones (37) (distinct from and different to the support feet (32) and from the internal cavities of the fork seats (312)) defined at the lower surface of the loading plane (31).

In a first embodiment illustrated in figures 2-7, each support zone (37) is arranged on the opposite side of a fork seat (312) with respect to the pair of support feet (32) (aligned along the direction parallel to the longitudinal axis of the fork seat 312) proximal thereto.

In this case, each support zone (37) is arranged adjacent (externally) to the proximal pair of support feet (32) (i.e. the horizontal projection thereof along the direction of reciprocal alignment).

Each support zone (37) is advantageously defined by/at a portion of a peripheral portion of the larger beams (310) of the loading plane (31) (proximal to the internal end constrained to the fork seats 312) and possibly by a portion of the (second) longitudinal reinforcing beams (314).

For example, each support zone (37) can be defined by a plate (of a certain thickness) fixed inferiorly to the portion of peripheral portion of the larger beams (310) of the loading plane (31) (proximal to the internal end constrained to the fork seats 312) and possibly below the portion of the (second) longitudinal reinforcing beams (314).

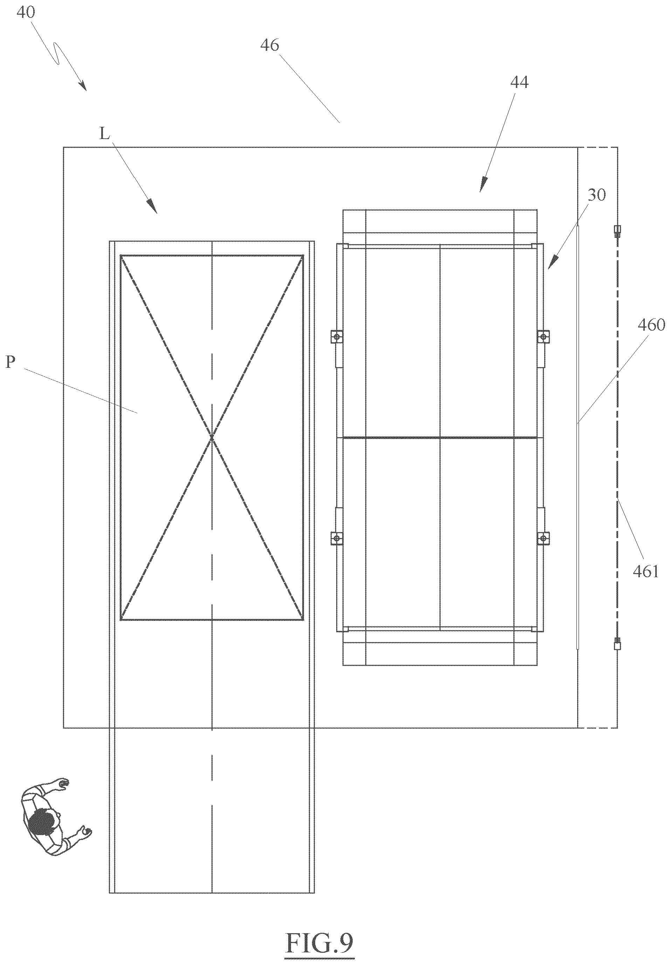

In the second embodiment illustrated in figure 9, each support zone (37) is aligned to a respective fork seat (312), for example is defined by the lower wall of a respective fork seat (312) or a portion thereof.

The movable supporting platform (30) is advantageously configured to be selectively restingly supported at the support feet (32), the fork seats (312) (as described above) and the support zones (37) (by dint of the shelves).

The loading plane (31), for how it is configured and constrained with respect to the constraint means, when a load defined by at least one tile or a stack of tiles (P) is bearing thereon and at the same time is rested on the support feet (32) and/or on the fork seats (312) and/or on the support zones (37), is deformable in flexion (as described above) with an arc-shaped deformation with a concavity facing downwards (or upwards) and having a continuous curvature, wherein the continuous curvature has a maximum point (or maximum line) or a minimum point (or minimum line) substantially at a transversal vertical median plane of the loading plane (31) equidistant from and parallel to the fork seats (312).

Given the proximity/coincidence of the constraint means (also defined by the support feet (32), by the fork seats (312) and by the support zones (37)), the curvature of the loading plane (31) is advantageously substantially the same when it is resting on the support feet (32) with respect to when it is supported at the fork seats (312) (elevated from the support feet (32) and received by the forks of a carrier) and when it is supported at the support zones (37).

In this context, "substantially equal" is taken to mean that the continuous curvature is the same as or differs when rested on the support feet (32) with respect to when it is supported at the fork seats (312) and with respect to when it is supported on the support zones (37) possibly only for the opening (of the parabola), wherein when the loading plane (31) is supported at the fork seats (312) it has a minimum opening and when it is supported at the support feet (32) it has an intermediate opening which is greater than the minimum opening and when the loading plane is supported at the support zones (37) it has a maximum opening (greater than the minimum opening and the intermediate opening).

Again, the movable supporting platform (30) can be elevated and transported by a (different type of) self-propelling carrier, AGV, which comprises a bearing frame mounted on drive wheels having dimensions that are such as to be insertable below the loading plane (31) of the movable supporting platform (30), for example between the support feet (32).

This self-propelling carrier comprises a loading unit (defined by loading columns or a loading plane) defining an upper support plane, substantially horizontal (i.e. parallel to the ground surface (150)), which is arranged superiorly of the bearing frame.

The loading unit can be contained in the volume (in width and/or length) of the bearing frame, for example it can have a shape or volume that overall has a rectangular plan (homologous or having smaller dimensions) with respect to the plan shape of the bearing frame.

The loading unit, for example, is defined by a plurality of coplanar planar surfaces (defined by the top of the loading columns), for example arranged at the corners of a quadrilateral form, preferably a rectangle.

The self-propelling carrier further comprises an actuation system, which is configured to vary the height of the loading unit with respect to the ground surface (150), alternatively between a lowered position, wherein the height (i.e. the vertical volume) of the self-propelling carrier is at a minimum height (smaller than the distance from the ground surface (150) of the loading plane (31) resting on the ground surface with the support feet (32)), and a raised position, wherein the height of the self-propelling carrier (20) is greater than the above-mentioned minimum height (and is greater than the distance from the ground surface (150) of the loading plane (31) rested on the ground surface with the support feet (32)).

For example, the loading unit (defined by the above-mentioned upper support surfaces) is formed by the top of a respective plurality of linear actuators of which the above-described actuation system is composed.

In this case, the loading unit of the self-propelling carrier is configured to raise the movable supporting platform (30) for the transport thereof by inserting below the loading plane (31) (between the support feet (32) with the loading unit in the lowered position and, thereafter, to elevate the loading unit (up to the raised position), in such a way that (the four upper support surfaces define) the loading plane of the self-propelling carrier goes into contact with the lower wall of the fork seats (312) (or a surface beside it or a lower surface than it) and receives and accommodates the movable supporting platform (30).

In this configuration, the movable supporting platform (30) rests on the loading plane of the carrier at the (lower walls of the) fork seats (312) or on other proximal rests.

In this load configuration too, the loading plane (31), due to how it is configured and constrained with respect to the constraint means, when a load defined by at least one tile or a stack of tiles (P) is bearing thereon and is resting on the (lower walls of the) fork seats (312), is deformable in flexion (as described above) with the above (equal) deformation (continuous) arc-shaped with the concavity facing downwards (or upwards) and having a single continuous curvature, wherein the curvature has a maximum (or minimum) point (or line) substantially at a transversal vertical median plane of the loading plane (31) equidistant from and parallel to the fork seats (312).

Given the proximity/coincidence of the constraint means (defined alternatively by the support feet (32), by the fork seats (312) (internal or external) and by the support zones (37)), the curvature of the loading plane (31) is advantageously substantially the same when it is resting on the support feet (32) with respect to when it is supported at the fork seats (312) (elevated from the support feet (32) and received by the forks of a carrier or by the loading plane of a self-propelling carrier) and when it is supported at the support zones (37).

The movable supporting platform 30 can further comprise one or more containment elements of the load (i.e. of the tile (P) or stack of tiles (P) resting on the loading plane (31), which rise from the loading plane (31), for example pe-rimetrally with respect thereto, and are configured to laterally contain the tiles (P) or stack of tiles (P) arranged on the loading plane (31).

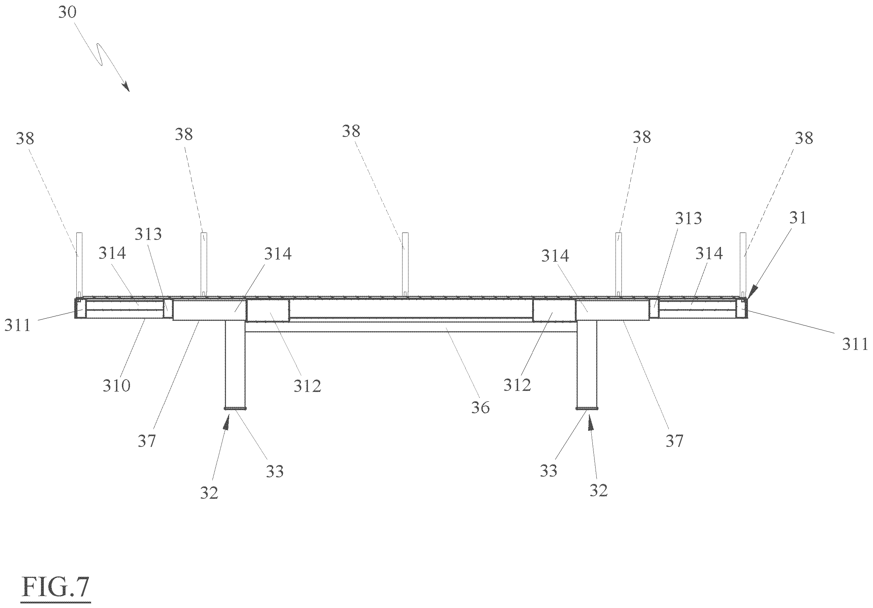

The containment elements - illustrated only in figure 7 - are installed, rigidly (as illustrated) or slidably/movably as described in Italian Patent no. 102021000011402 belonging to the same Applicant - for example in such a way to tighten laterally on the load - to the loading plane (31).

The containment elements are preferably fixed to the loading plane (31) removably, i.e. in such a way as to be able to be removed when required.

In particular, in the loading/unloading steps of the movable supporting platform (30) with tiles (P), the containment elements can advantageously be removed, so as not to constitute an obstacle for the loading/unloading operations.

In this way, the loading plane (31) is free from any facing element above it.

The containment elements, for example, comprise or are constituted by a plurality of pins (38) (rising vertically at right angles from the upper surface of the loading plane (31) and) provided with a lower end constrained (for example screwed) to the loading plane (31), for example at a respective portion of upper wall of the larger beams (310) and the smaller beams (311), and a free opposite upper end.

The height of the containment elements is advantageously smaller than the height of the support feet (32) (in such a way as not to prevent/obstruct the stacking of a plurality of movable support platforms (30)).

Alternatively to the foregoing, the movable supporting platform (30) can be of a traditional type, for example of the type described in patent application no. 102021000011402 belonging to the same Applicant or of the type described in patent no. 102017000034359 or the like.

In these examples, each support foot (32), vertically arranged, has a lower portion which extends inferiorly with respect to the loading plane (31) (i.e. the lower surface thereof) in such a way as to maintain the loading plane (31 (i.e. the lower surface thereof) elevated from the ground. Each support foot (32) preferably also has an upper portion (32) that extends above the loading plane (31) (i.e. the upper surface thereof); in other terms, each support foot (32) has a length that is such as to extend both above and below the loading plane (31).

In a further simplified version of the system (10), each movable supporting platform (30) can be defined or constituted by a (simple) support slab (39), made for example of metal or ceramic or wood, or a pallet or the like.

The support slab (39) has an upper surface (planar) that is maintained in a horizontal position, on which a tile or a stack of tiles (vertically stacked) is deposited for support and an opposite (planar) lower surface aimed at being rested on the ground surface or on suitable shelves (of a shelving or the like), as is known to the expert in the sector.

In some applications, the tiles (stacked or flanked horizontally) might not be supported by any lower support, but can be stored, transported and handled directly, with no auxiliary supports.

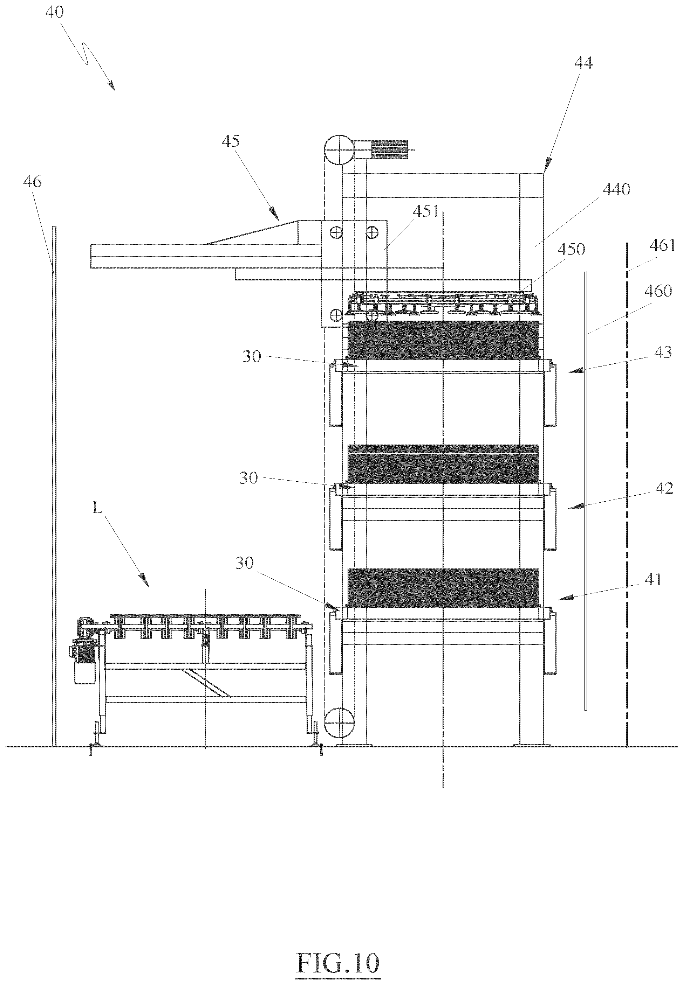

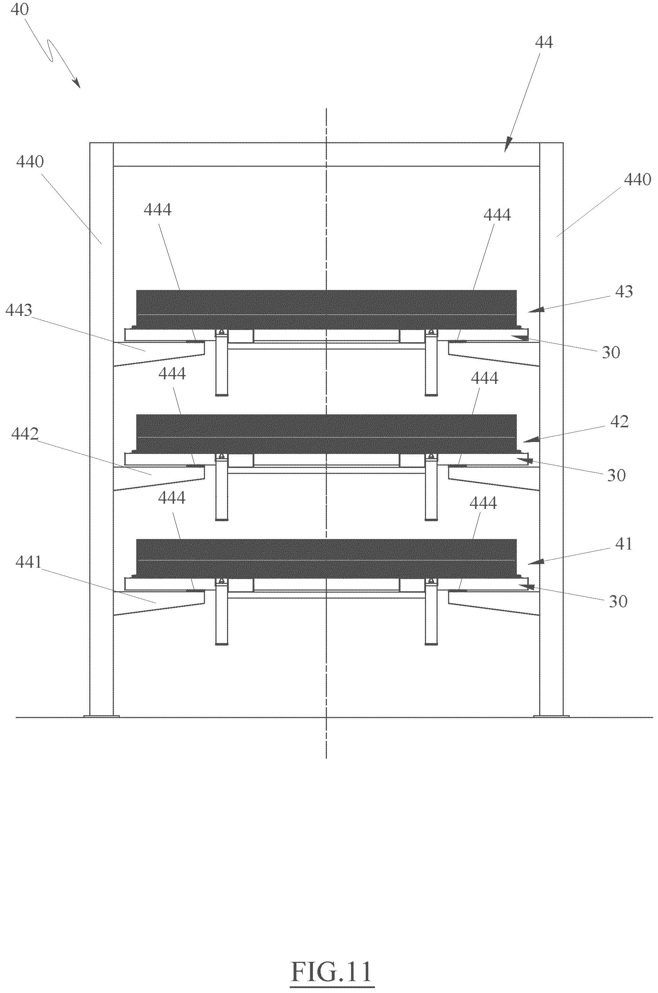

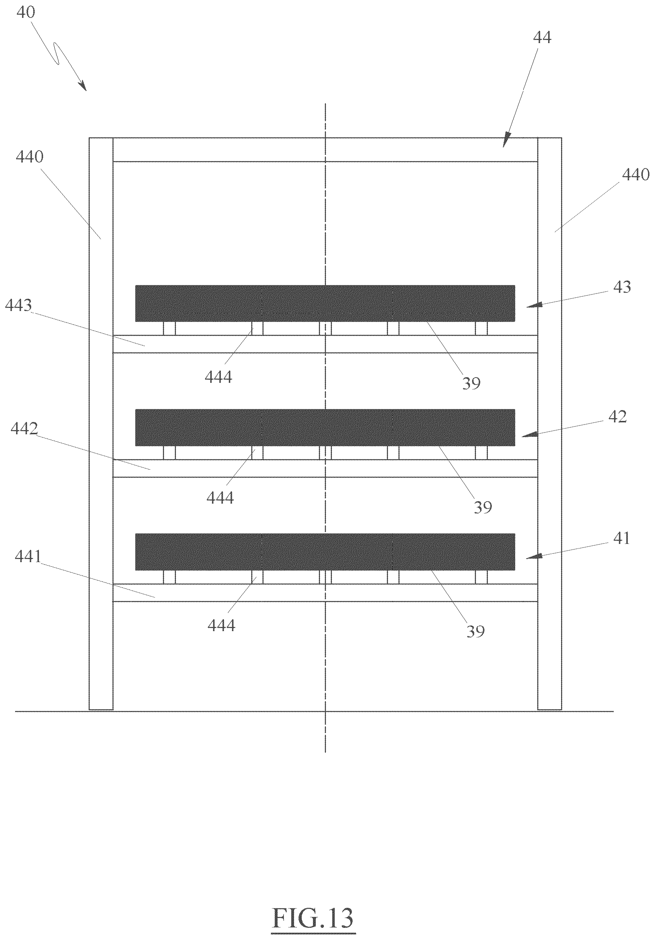

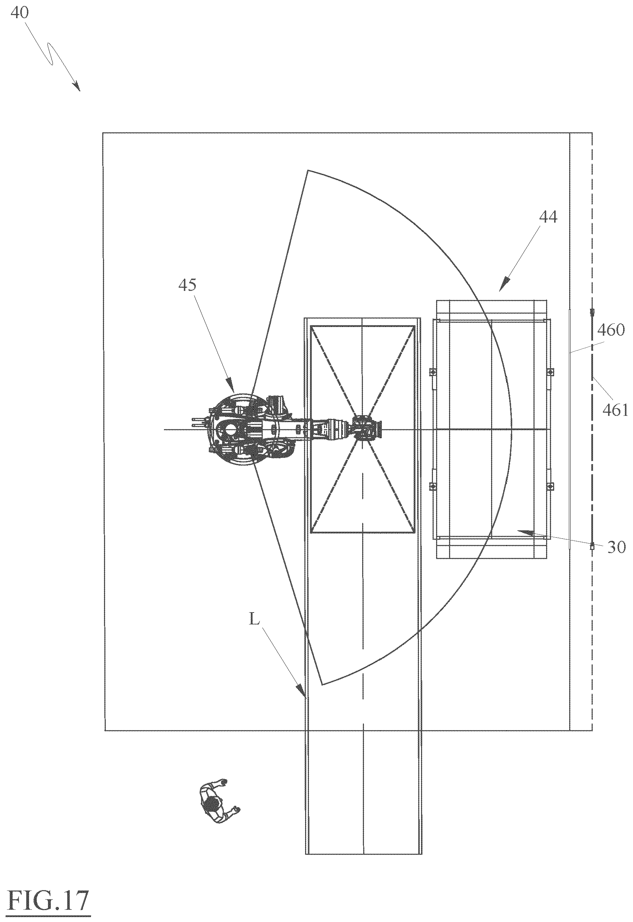

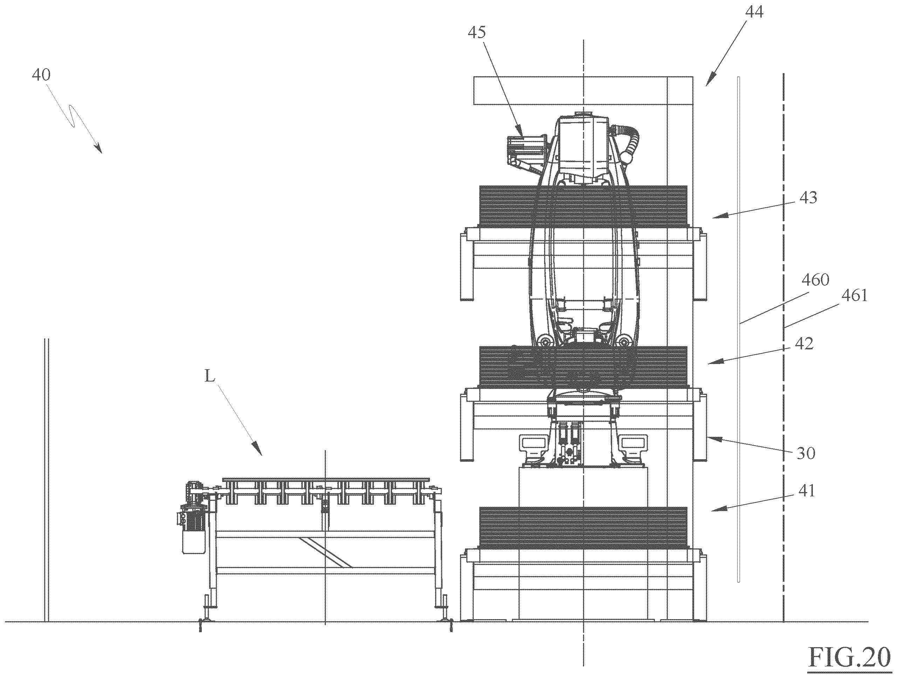

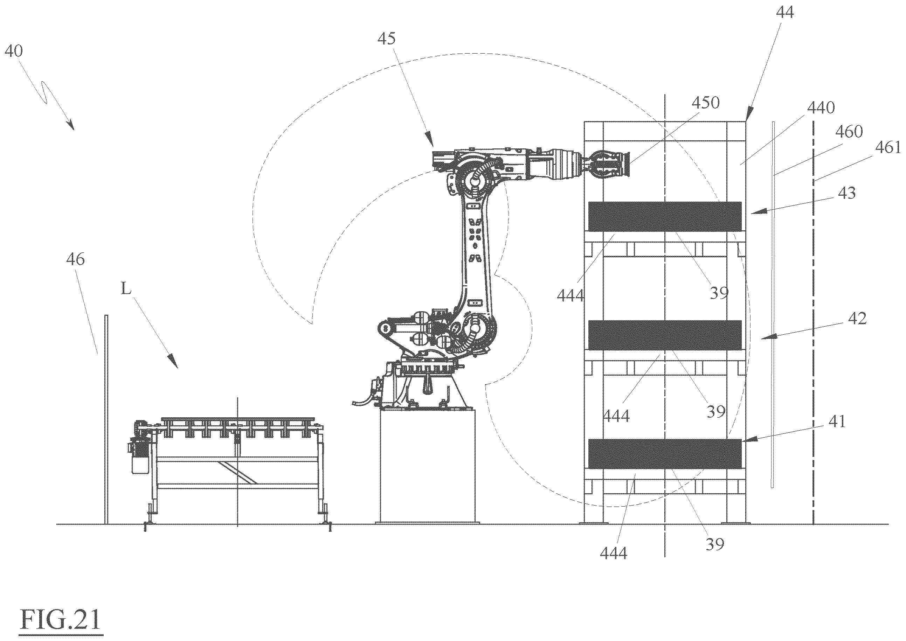

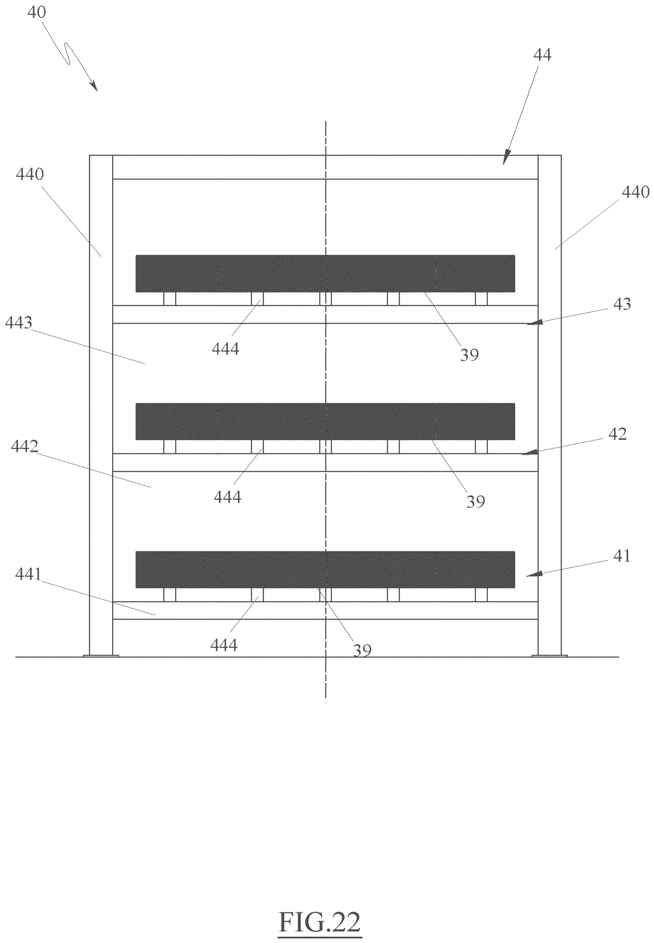

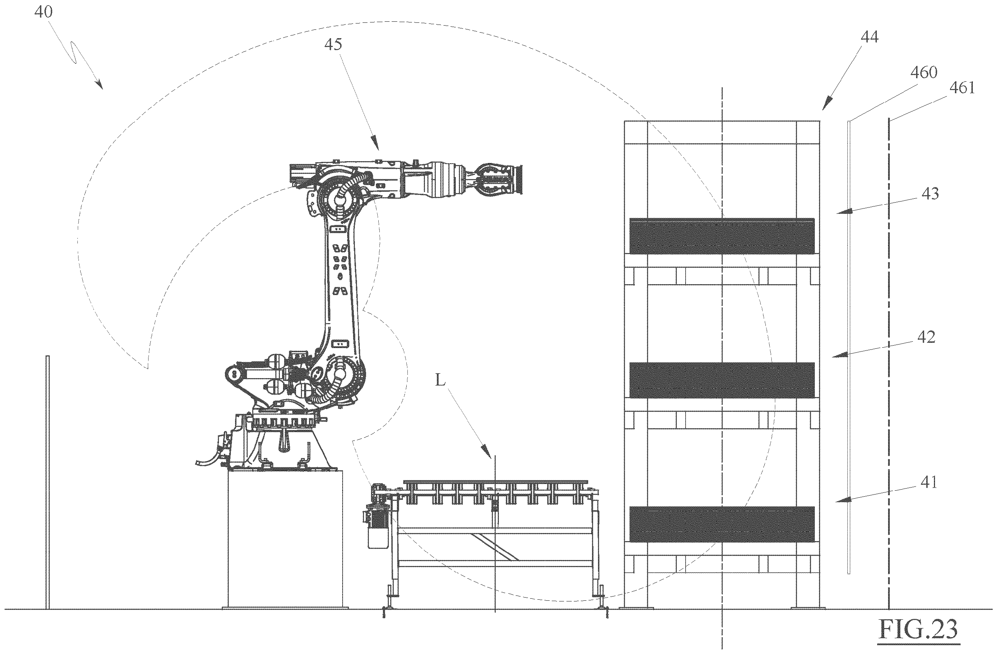

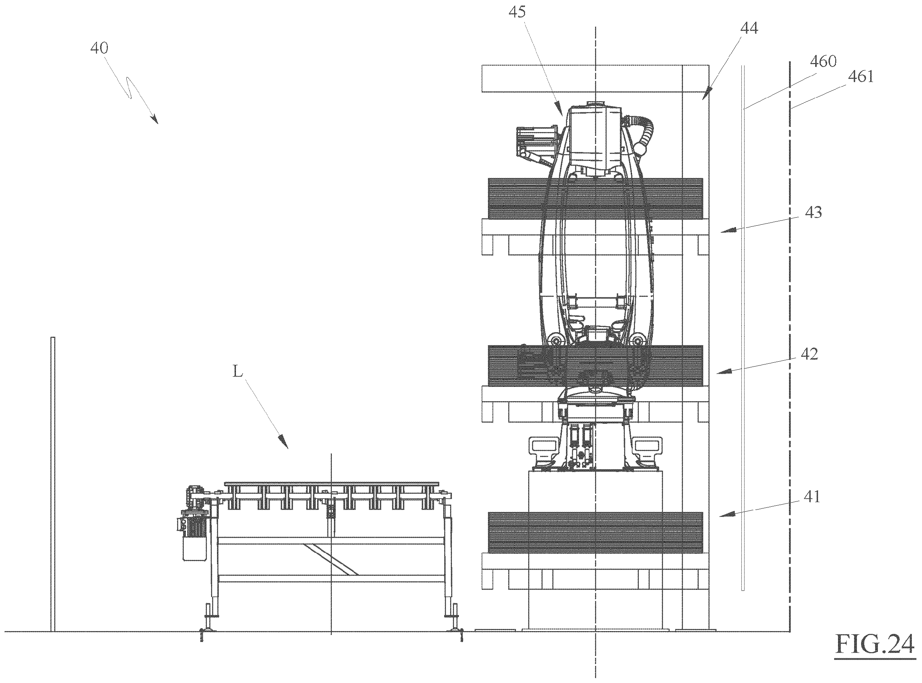

The system (10) further comprises at least a loading/unloading machine (40) (illustrated in detail in figures 9-24), which is configured to load/unload tiles on/from one or more movable supporting platforms (30) and/or to stack/unstack tiles (on/from one or more movable supporting platforms (30) or on temporary support shelves from which they can be collected and on which they can be restacked).

The machine 40 is for example arranged in the loading/unloading area of the storage warehouse 15.

The machine 40 is for example configured:
- to load (single) tiles or (single) tile planes flanked horizontally (squares), coming from a service line (illustrated schematically in figure 1), (stacking them) on at least one movable supporting platform (30) (at a time) on temporary support shelves; then, once the stack of tiles is completed, it will be brought into a storage zone of the storage warehouse (15), and (vice versa); and
- to unload tiles (stacked), or tile planes (stacked and not) from at least a movable supporting platform (30) (at a time) and/or from a temporary supporting shelf (at a time), coming from a storage zone of the storage warehouse (15), and supply them (unstacked) to the service line.

In practice, the machine (40) comprises a loading/unloading line (L), which is for example served by one or more service lines, such as the rectifying line, the selection line etc.

The loading/unloading line (L) is for example defined by a conveyor belt, or roller plane, for example motorised, defining a support plane (horizontal) that is movable along a movement direction (in two directions), for example set by the drive of the conveyor belt, or roller plane.

It is possible for the loading/unloading line (L) to be defined by at least a belt and/or roller plane which, for example, is configured to make up the plurality of flanked tiles (square) or - when needed - also a bench (30) moved by a self-propelling carrier (20) or directly by a self-propelling carrier (20) or another method.

The machine (40) further comprises a plurality of loading/unloading stations (41, 42, 43) each served by the loading/unloading line (L).

In each of the loading/unloading stations (41, 42, 43), a tile or tile plane will be temporarily rested (flanked horizontally, (i.e. in a square) or a (vertical) stack of tiles directly (i.e. without the interposing of movable supporting platforms) or resting on a movable supporting platform (30).

The loading/unloading stations (41, 42, 43) are advantageously identical to one another and are vertically aligned in plan, as will be more fully explained in the following.

In the following a description will be given of the configuration of the machine (40) which has three loading/unloading stations (41, 42, 43), although the machine can also have only two loading/unloading stations or, alternatively, it can have a number of more than 3 loading/unloading stations (vertically aligned, as will be described herein below).

The machine (40) preferably comprises three loading/unloading stations (41, 42, 43), of which:
- a first loading/unloading station (41), (in which a tile or a stack of tiles is aimed at being temporarily arranged rested, directly or on a movable supporting platform (30);
- a second loading/unloading station (42), which is vertically aligned to the first loading/unloading station (41) along a vertical stacking direction (and in which a further tile or a stack of tiles is aimed at being temporarily arranged rested, directly or on a further movable supporting platform (30)), in which the tile or stack of tiles positioned in the second loading/unloading station (42) is at a non-zero distance from the tile or stack of tiles positioned in the first loading/unloading station (41); and
- a third loading/unloading station (43), vertically aligned to the first loading/unloading station (41) and to the second loading/unloading station (42) along the vertical stacking direction (and in which a further tile or a stack of tiles is aimed at being temporarily arranged rested, directly or on a further movable supporting platform (30)), in which the tile or stack of tiles in the third loading/unloading station (42) is at a non-zero distance from the tile or stack of tiles positioned in the first loading/unloading station (41) and in the second loading/unloading station (42).

In the illustrated example, the second loading/unloading station (42) is intermediate/interposed with respect to the first loading/unloading station (41) and the third loading/unloading station (43).

For example, the loading/unloading stations, i.e. the first loading/unloading station (41), the second loading/unloading station (42) and the third loading/unloading station (43), are identical (technically) and, for example, interchangeable (functionally).

The loading/unloading stations, i.e. the first loading/unloading station (41), the second loading/unloading station (42) and the third loading/unloading station (43), are preferably arranged at respective determined heights and, preferably, though not necessarily, are equidistant.

The machine (40) preferably comprises a portal frame (44) (rigid, i.e. undeformable with respect to the usual loads and stresses to which it is subjected when utilised), which is provided with a pair of vertical uprights (440), the base of which is rested on the ground surface (150), and a fixed horizontal cross-member (rigidly fixed), at the axial ends thereof, at (the top of) the vertical uprights (440).

The portal frame (44) has an overall height given by the height of the vertical uprights (440), a length (or prevalent dimension) given by the length of horizontal cross-member and a width (or smaller dimension) given by the depth (along an orthogonal direction to the height and length) of the vertical uprights (440) and/or of the horizontal cross member.

For example, each vertical upright (440) is defined by at least a pair of vertical longitudinal members and the horizontal cross-member is defined by at least a pair of horizontal longitudinal members joined together and a pair of horizontal longitudinal members joined to one another at right angles to define a border (rectangular).

The portal frame (44) further comprises a plurality of temporary support shelves (441, 442, 443) (horizontal), each defining a respective loading/unloading station (41, 42, 43).

In practice, a tile or tile plane or a tile plane (square) or a stack (vertical) of tiles are directly temporarily arranged on each of the shelves (441, 442, 443) (i.e. without the interposing of movable supporting platforms, for example by interposing appropriate longitudinal members, as will be more fully explained in the following) or resting directly on a movable supporting platform (30) (or by interposing a movable supporting platform (30)).

The shelves (441, 442, 443) are advantageously identical to one another and are vertically aligned in plan view, as will be more fully explained in the following, preferably equidistant from one another.

Each of the shelves (441, 442, 443) is fixed (with respect to the ground surface (150), i.e. is located at a predetermined fixed height).

Each of the shelves (441, 442, 443) is preferably rigidly fixed to (the inside of the) vertical uprights (440) and, preferably, extends over the whole width of the vertical uprights (440).

In greater detail, in the illustrated case, the shelves (441, 442, 443) comprise at least:
- first shelves (441) defining the first loading/unloading station (41);
- second shelves 442, aligned vertically to the first shelves 441 and at a non-zero distance therefrom, which define the second loading/unloading station (42; and
- third shelves 443, aligned vertically to the first shelves (441) and to the second shelves (442) and at a non-zero distance therefrom, which define the third loading/unloading station (43).

Each of the shelves (441, 442, 443) is defined/composed/constituted by a pair of coplanar projecting planes, each of which is fixed (in a cantilever fashion) to a respective vertical upright (440).

Each of the planes has an end rigidly constrained to the respective vertical upright (440) and an opposite free end, facing towards the inside of the (tunnel defined by) the portal frame (44).

The two planes that constitute the respective shelf (441, 442, 443) are separated from one another along the direction of the length of the portal frame (44) (being defined between them a vacant interspace of a predefined size), in detail the free ends of the two planes which constitute the respective shelf (441, 442, 443) are separate/distanced from one another by a predetermined non-zero distance, for example greater than the distance between two pairs of support feet (32) of a movable supporting platform (30) and/or of the minimum distance between the two forks (21) of any one self-propelling carrier (20). The upper surface of each of the pair of planes which defines a respective shelf (441, 442, 443) overall defines a temporary support plane (horizontal) on which a tile (P), a tile plane (P) or a stack of tiles (P) is aimed at being arranged supported, directly or by interposing a movable supporting platform (30).

Advantageously and especially in a case in which the movable supporting platforms (30) are rested on the shelves (441, 442, 443), the platforms will rest (exclusively) on any one of the shelves (441, 442, 443), i.e. on the planes that define them, at the above-described support zone (37).

In this case, each of the shelves (441, 442, 443) can comprise, as in the illustrated case, in proximity or at the free end thereof (of each of the planes defining it) distal from the respective upright, an elevating body (444) (rigidly fixed above the upper surface of the planes), for example defined by a horizontal plate (with a calibrated thickness), which is configured to define the above-mentioned temporary support plane and therefore a raised support for the movable supporting platform (30), preferably in such a way that the elevating body (444) is the only part of the shelf (441, 442, 443) in contact with the movable supporting platform (30) preferably exclusively at the support zone (37) thereof.

It is possible, in some applications, for the elevating body not to be present/not to be necessary.

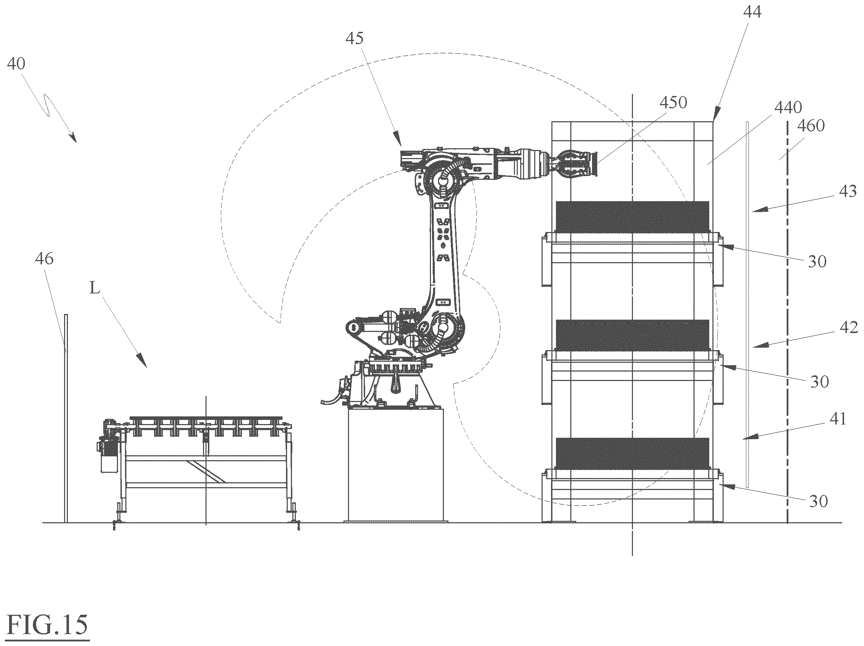

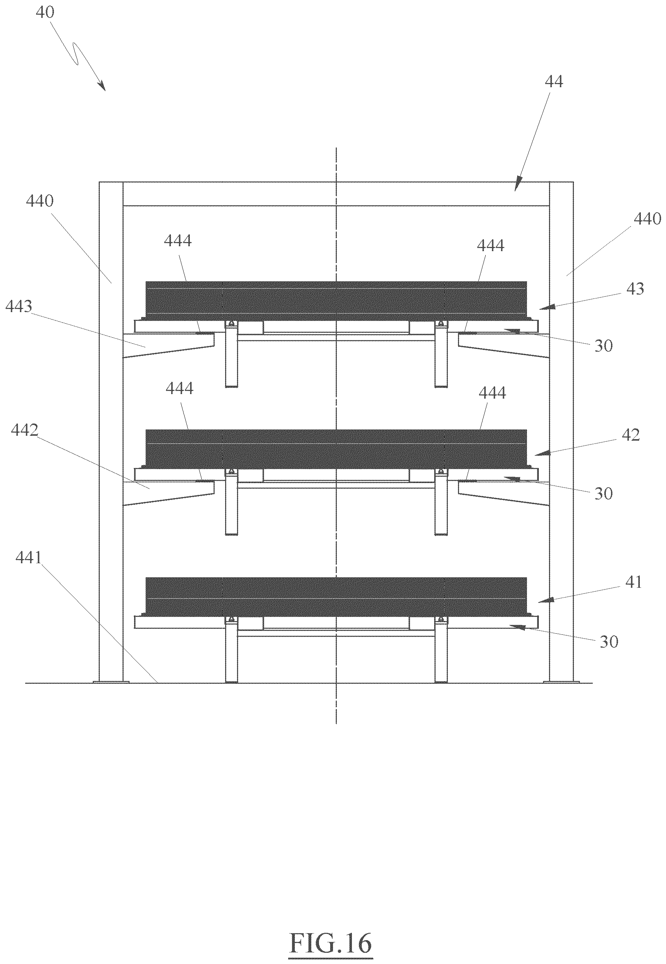

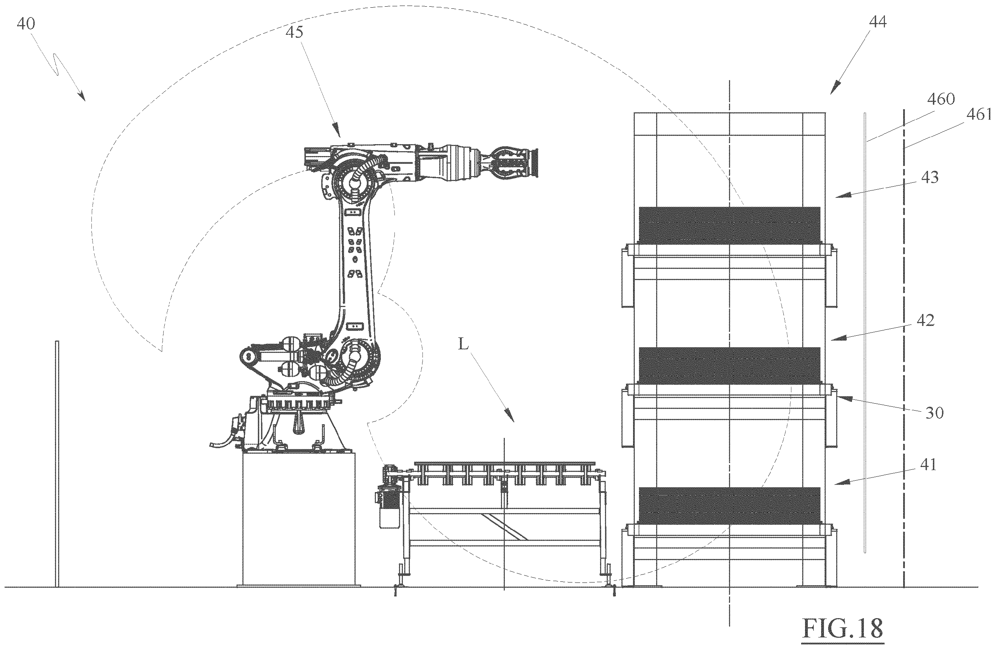

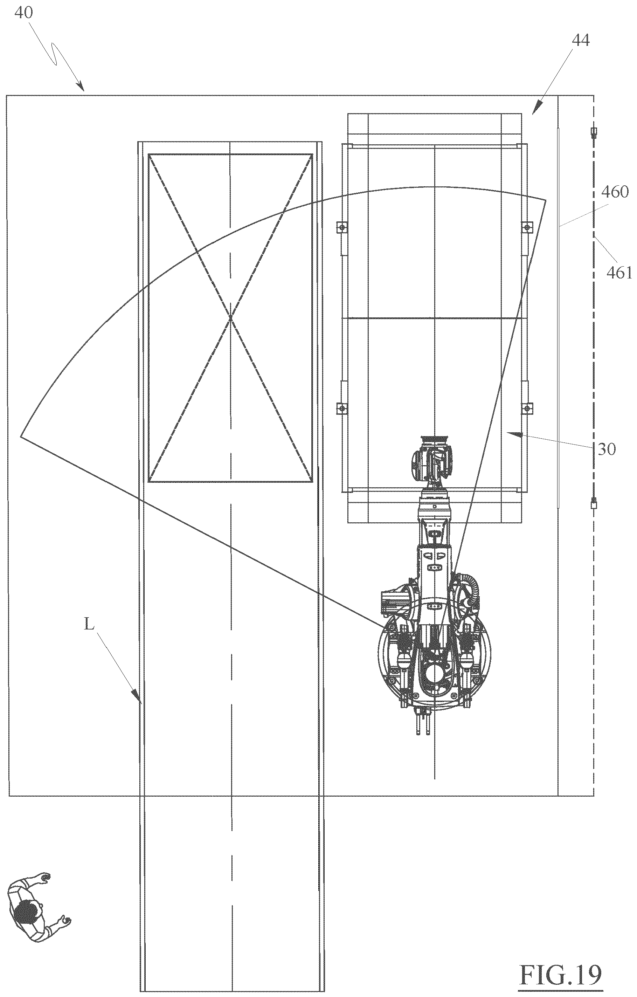

Further, it is also possible for the first shelves (441) of the first loading/unloading station 41 (i.e. the lower surface thereof) to be constituted or realised by a portion of ground surface (150) (as illustrated in figures 15 and 16 or in figures 18 and 19, where the movable supporting platform (30) is received resting on the (lower end (33) of) the support feet (32)).

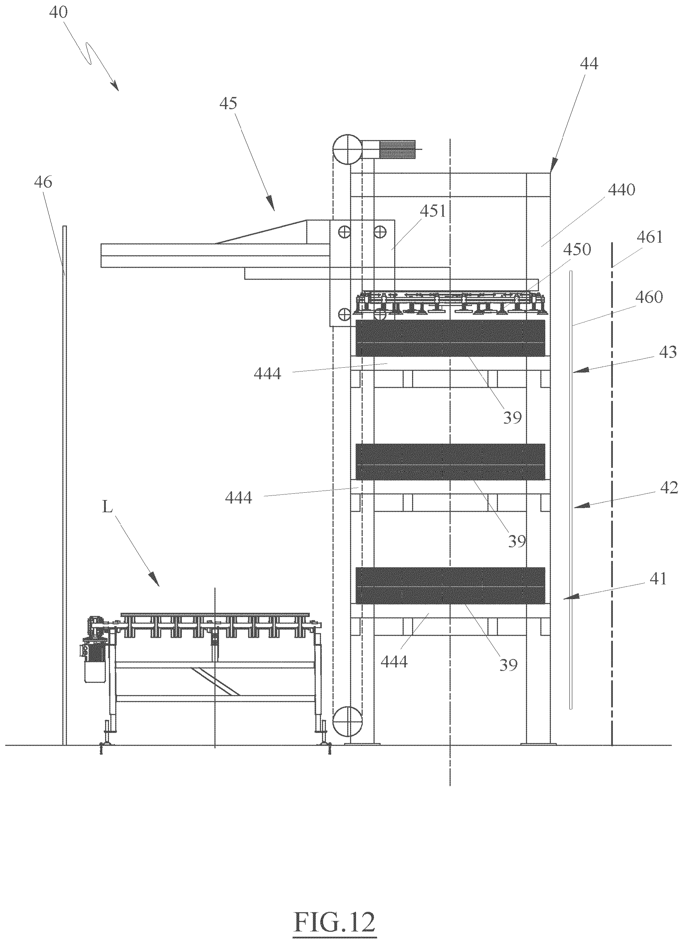

In a case in which the system (10) does not comprise movable supporting platforms (30) with support feet (32), i.e. the tiles (P) or the tile planes (P) or stacks of tiles (P) can be rested in the loading/unloading stations (41, 42, 43) directly or by interposing the support slab (39), as schematically illustrated in the variants of figures 12-13 and 21-24, each of the shelves (441, 442, 443) might be continuous (or might extend over the whole length of the portal frame (44)) and, for example, can have a plurality of coplanar further elevating bodies (444) (also known as longitudinal members, which are defined by a plurality of parallel longitudinal members, and, for example, occupying the whole width of the portal frame (44)) for enabling the insertion of the forks (21) beneath the tiles (P) of the support slab (39) supported thereby and the elevating/lowering thereof from the elevated support plane defined by the top of the elevating bodies (444).

The portal frame 44, is configured - therefore - as a tunnel (with the crossing axis horizontal and parallel to the width thereof) and is crossable along a crossing direction parallel to the width thereof by the tiles or stacks of tiles (P), directly or resting on a respective movable supporting platform (30) (at each of the loading/unloading stations (41, 42, 43)), along the crossing direction, as will be more fully explained in the following.

The portal frame (44) therefore comprises a first end (along the crossing direction) faces and is proximal to the loading/unloading line opposite the second end aligned with the first end along the crossing direction (and therefore distal from the tile loading/unloading line (L)), wherein the first end and the second end are open, so as to allow access to the tiles or stacks of tiles (possibly resting directly on a respective movable supporting platform (30) at any one from among the first loading/unloading station (41), the second loading/unloading station (42) and the third loading/unloading station (43) (from any part/direction of the portal frame (40) along the crossing direction).

The loading/unloading line (L) is preferably flanked (at a non-zero distance therefrom) to the portal frame (44), i.e. to the plurality of loading/unloading stations (41, 42, 43) in its entirety, along a horizontal flanking direction parallel to the above-mentioned crossing direction and, preferably, orthogonal to the sliding direction of the tiles on the loading/unloading line (L) (set by the drive thereof).

The machine (40) further comprises a transfer device (45) configured to operate the transfer of the tiles (preferably one tile or a tile plane at a time) between the loading/unloading line (L) and any one from among the loading/unloading stations (41, 42, 43) of the machine (40).

The transfer device (45) is for example interposed between the loading/unloading line (L) and the portal frame (44), i.e. at the loading/unloading stations (41, 42, 43) in its entirety, along the above-mentioned flanking direction.

The transfer device (45) is configured to:
- pick up at least one tile (for example a single tile at a time or a tile plane at a time) from the loading/unloading line (L) and transfer the collected tile/s to rest on a (predetermined) any of the shelves (441, 442, 443) which defines a respective) loading/unloading station (41, 42, 43), directly or - or preferably - on the loading plane (31) of the lower movable supporting platform (30) arranged in the predetermined loading/unloading station (41, 42, 43) of the machine (40); and (vice versa)
- pick up at least one tile (for example a single tile at a time or a tile plane at a time) from a (predetermined) any of the the shelves (441, 442, 443) which defines a respective) loading/unloading station (41, 42, 43) (on which it is in direct support or arranged on the loading plane (31) of the movable supporting platform (30) positioned there) and transferring the collected tile/S onto the loading/unloading line (L).

The transfer device (45) comprises at least a pick up and transfer device (450) configured to pick up and release a tile or a tile plane (at a time).

The pick up and transfer device 450 is, for example, a suction cup (i.e. comprising one or more suction gripping/release cups) or a suction plane.

In a first embodiment (illustrated in figures 9-13), the transfer device (45) is of the Cartesian type.

For example, the pick up and transfer device (450) can be of the suction cup type and have, for example, a frame, which inferiorly bears one or more suction cups defining a pick-up plane (facing downwards), each configured to adhere releasably (for example upon a command imposed by a pneumatic system), by a suction cup effect, to a main upper face of a (single) tile (P).

In the first embodiment, the transfer device (45) comprises a (fixed) vertical guide, for example provided with supports/anchoring points to the ground surface.

The vertical guide, for example, is supported by a (distinct) column and/or is defined by one or both of the vertical uprights (440) of the portal frame (40) (as in the case schematised in the figures).

The pick up and transfer device (450) is slidably associated to the vertical guide (made in one or both the vertical uprights (440)).

In practice, the pick up and transfer device (450) is vertically movable, on command, along the vertical guide and can be stopped in any (vertical) axial position thereof.

In detail, the transfer device (45) comprises a carriage (451) constrained to the vertical guide, by means of a form constraint defining a sliding couple having a vertical axis, and is vertically moved along the vertical guide by an appropriate motorisation (defined by one or more electric motors - including alternative commands, for example hydraulic, pneumatic, and so on -) and appropriate drive transmission members (such as chains or crown wheels or belts and pulleys and so on).

The carriage (451) in turn supports the pick up and transfer device (450).

The pick up and transfer device (450) is preferably also movable in a horizontal direction at least between a first position, in which it is vertically aligned to the loading/unloading line (L), and a second position, in which it placed internally of (the tunnel defined by) the portal frame (40), i.e. is placed (at least partially) aligned in plan view to any one of the loading/unloading stations (41, 42, 43) of the machine (40).

The pick up and transfer device (450) is preferably also movable in a horizontal direction between the (only) first position, and a plurality of second positions, opposite with respect to the first position (along a single permitted horizontal sliding direction), as a function of the height of the carriage (451) along the vertical guide.

In this way, the pick up and transfer device (450), in the second position thereof, can be arranged selectively in any one of the loading/unloading stations (41, 42, 43).

In detail, (the pick up and transfer device (450) is supported by a bar, for example telescopic (but which might not be telescopic, for example of a single stroke type), which is provided with at least one part (central) fixed to the carriage (451) and one (or more) movable part slidably coupled to the fixed part along the above-mentioned horizontal sliding direction and supporting the pick up and transfer device (450).

The fixed part, for example, is conformed as a channel having an open lower wall to enable the sliding of the pick up and transfer device (450) on one side and on the other thereof.

For example, the pick up and transfer device (450) (i.e. the above-mentioned bar) is activated to horizontally slide by means of a suitably motorisation or command (for example by an actuator or an electric motor) electric or not electric.

In practice, the pick up and transfer device (450) is supported (by the portal frame (44)) by a Cartesian system (defined by the vertical guide and the bars) having two degrees of freedom, of which a vertical translational degree of freedom (defined by the sliding of the carriage (451) along the vertical guide) and a horizontal translational degree of freedom (defined by the sliding imposed by the bars).

Preferably, the horizontal sliding direction of the pick up and transfer device (450) is parallel to the flanking direction (or also the crossing direction) as mentioned above, i.e. orthogonal to the sliding direction of the tiles on the loading/unloading line (L) and/or orthogonal to the longitudinal axis of any tile or movable supporting platform 30, where included, when arranged temporarily resting in any one of the loading/unloading stations (41, 42, 43) of the machine (40).

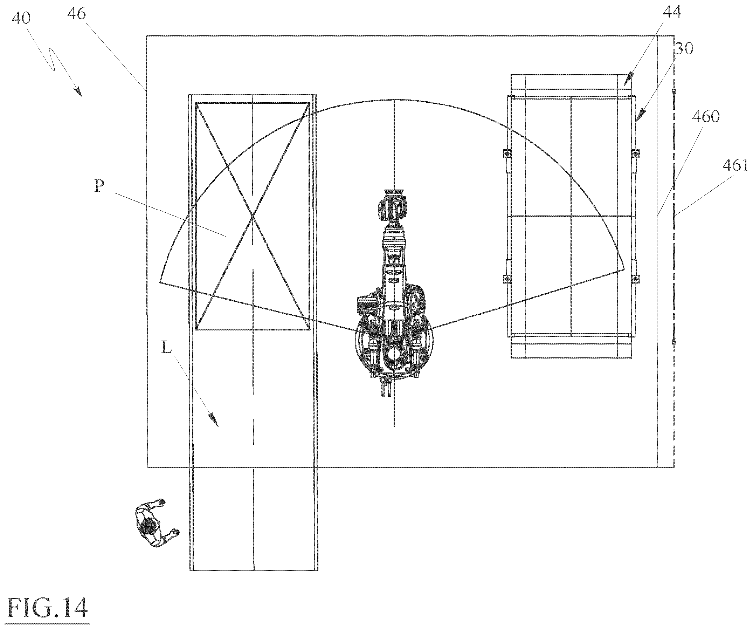

In a second embodiment (illustrated in figures 14-24), the transfer device (45) comprises an anthropomorphic robot (or Cartesian robot).

In this case, the anthropomorphic robot has a base fixed to the ground surface (150) and an articulated arm supporting, at the free end thereof, the pick up and transfer device (450), which is defined for example by a suction cups or a plane of suction cups

The machine (40), for example, can be arranged internally of a protection cage (46), preferably perimetral, or another protection (or might even not have physical protections).

The protection cage (46) (or in general the protection), for example, has an opening at the loading/unloading line (L) for example crossed by the loading/unloading line (L).

Further, the protection cage (46) (or in general the protection) comprises a further opening to the portal frame (44) along a crossing direction thereof and located on the opposite side of the transfer device (45) with respect to the portal frame (44).

In practice, the further opening (rear) is arranged proximal to/facing the second end of the portal frame (44) and is configured for at least partial access (internally of the protection cage (46)) of the self-propelling carrier (20) (i.e. at least of the forks (21) thereof).

The further opening is openable/closable, on command, by means of a closing and protective element (460), which is configured to open/close (the access to the self-propelling carrier (20) at) any one of the loading/unloading stations (41, 42, 43) or each thereof (on the side of the second end of the portal frame (44)), i.e. served by the self-propelling carriers (20) opposite the side of the first end served by the transfer device (45) along the crossing direction).

The closing and protective element (460), for example, comprises at least a shutter, preferably a sectional shutter i.e. obtained by a plurality of shutters, preferably independent of one another, for example superposed in plan view and actionable, on command, for the selective or contemporary opening of one or more sections of the further opening of the protection cage (46).

For example, the shutter (or each section of the shutter) is configured to be switched between a closed position, in which it totally closes the further opening of the protection cage (46), i.e. it closes (access to) all the loading/unloading stations (41, 42, 43), and at least an open position in which it selectively opens at least any one of the plurality of loading/unloading stations (41, 42, 43) contemporaneously or, preferably, selectively.

In practice, the shutter is configured to selectively open the section corresponding (i.e. aligned horizontally) to the loading/unloading station (41, 42, 43) chosen for the insertion of the forks (21) of the self-propelling carrier (20) in the selected loading/unloading station (41, 42, 43) (leaving the other loading/unloading stations (41, 42, 43) closed) for the collection/release of a tile or stack of tiles in the loading/unloading station (41, 42, 43).

For example, the lower part of the shutter (proximal to the ground surface) is open (or there is no shutter present in the lower zone of the opening) in order to allow the insertion of the structure of the self-propelling carrier (20) when the forks 21 insert in one from among the loading/unloading stations (41, 42, 43).

For the automatic opening (and closing) of (each section of the) shutter detection means can be provided of the presence (and position) of the self-propelling carrier (20), such as for example a laser scanner or a barrier with photocells (461) or the like.

The system (10) comprises an electronic control unit (100) which is configured to manage the system (10) automatically (completely or at least partially).

In particular, the electronic control unit (100) is operatively connected to each self-propelling carrier (20), in order to manage the operation of the steps of functioning, displacement and stationing according to a predetermined control cycle.

Further, the electronic control unit (100) is operatively connected to the machine (40) (i.e. to a control module thereof which commands/controls the transfer device (45) and possibly the loading/unloading line (L) and/or the closing and protective element (460)), in order to manage/command the functioning automatically.

The electronic control unit (100) can further be connected to a user interface via which the user can interact for the management of work sequences of the tiles, i.e. for programming and managing the interchange of tiles among the storage zones of the storage warehouse (15) and the loading/unloading line (L) or other operations.

In the light of the afore-mentioned, the functioning of the system (10) (automated and managed/controlled by the electronic control unit (100)) is the following.

In the following reference will be made to the functioning of the system (10) when movable supporting platforms (30) are present (of the above-described type), while understanding that like functioning steps can also be realised when the system does not include movable supporting platforms (30), but rather support slabs (39), or includes a direct support of the tiles (P).

To load/fill a movable supporting platform (30) of tiles (coming from the loading/unloading line (L)), the procedure as follows is observed.

First the pick up and transfer device (450) is brought to the loading/unloading line (L) and vertically aligned thereto, so that one tile can be picked up (or a tile plane) at a time, when located on the loading/unloading line (L).

Further, one from among the loading/unloading stations (41, 42, 43) is identified, onto which to transfer the tile/s coming from the loading/unloading line (L).

In parallel, a self-propelling carrier (20) is identified which goes to pick up an empty movable supporting platform (30) from a storage zone of the storage area of the storage warehouse (15).

Once the selected empty movable supporting platform (30) has been collected the self-propelling carrier (20) is commanded to bring the empty movable supporting platform (30) that has been picked up to the loading/unloading station (41, 42, 43) identified previously.

The pick up and transfer device (450) is commanded to transfer a tile or a tile plane (at a time) picked up from the loading/unloading line (L) to the loading plane (31) of the movable supporting platform (30) located (supported on the support zones (37) on the respective shelf (441, 442, 443)) in the identified loading/unloading station (41, 42, 43).

Progressively, as a tile (or tile plane) is loaded on the loading plane (31) of the movable supporting platform (30) a vertical stack of tiles (P) forms on the loading plane (31).

When the stack of tiles (or tile planes) on the loading plane (31) of the movable supporting platform (30) and the movable supporting platform (30) is full, a self-propelling carrier (20) can be called to come and remove it from the relative loading/unloading station (41, 42, 43) in order for it to be placed in the storage warehouse (15), for example resting on the ground surface or at the top of a stack of movable supporting platforms (30) which define the shelving (freely resting on the ground surface) or on a shelf of a storage shelving (for example with single-access shelves).

During the steps, described in the foregoing, of loading of a movable supporting platform (30) (of any one loading/unloading station (41, 42, 43)), a (further) self-propelling carrier (20) can be selected to go and pick up an empty movable supporting platform (30) from a storage zone of the storage area of the storage warehouse (15).

Once the selected empty movable supporting platform (30) has been collected the self-propelling carrier (20) is commanded to bring the empty movable supporting platform (30) picked up to the identified loading/unloading station (41, 42, 43) (for example while the first movable supporting platform (30) is filling or has completed filling).

For example, it is possible to coordinate the work of the self-propelling carriers (20) so as to realise combined cycles, i.e. such as to be commanded to bring the empty supporting platform (30) when a movable supporting platform (30) is full and ready to be taken away (using the self-propelling carrier (30) that has brought the empty movable supporting platform (30))

At this point, the self-propelling carrier (20) that has brought the empty movable supporting platform (30) can carry out the return run by taking the first full movable supporting platform (30) when it has completed the filling.

In practice, the electronic control unit (100) is configured to command the carrying out of a storage cycle of a movable supporting platform (30) full of tiles in the storage area that includes, in sequence, steps of:
- identifying a self-propelling carrier (20);
- commanding the identified self-propelling carrier (20) to lift an empty movable supporting platform (30), i.e. free of tiles, from a storage zone of the storage area of the storage warehouse (15);
- commanding the self-propelling carrier (20) identified to transport the empty movable supporting platform (30) collected to one of the first loading/unloading station (41), the second loading/unloading station (42) and the third loading/unloading station (43) which is free (i.e. to one whichever of the three loading/unloading stations (41, 42, 43) which is free, i.e. without movable supporting platforms) and released there;
- commanding the identified self-propelling carrier (20) to collect the full movable supporting platform (30) from at least the first loading/unloading station (41), the second loading/unloading station (42) and the third loading/unloading station (43) (i.e. from any one of the three stations which have a full movable supporting platform (30) and ready to be stored in the respective storage zone of the storage warehouse (15), for example while the transfer device (45) is operating the transfer of tiles between the loading/unloading line (L) and any one from among the loading/unloading stations (41, 42, 43); and
- commanding the identified self-propelling carrier (20) to transport the full movable supporting platform (30) collected to a respective storage zone of the storage area of the storage warehouse (15) and released there.

The above-described work cycle is repeated as needed and the loading/unloading stations (41, 42, 43) can be identified in an alternating/selective way, with a saving in terms of runs of the self-propelling carrier (20) and the reduction of machine down times (40), as one of the loading/unloading station (41, 42, 43) (of the three) is always free to pick up an empty movable supporting platform (30).

An empty movable supporting platform (30) is always available, in practice, to the machine (40) before it is freed from the full movable supporting platform (30) and with a single run of the self-propelling carrier (20) a change of the movable supporting platform (30) can be carried out (full/empty).

In reverse, to unload/empty a movable supporting platform (30) of tiles (and make the tiles available to the loading/unloading line (L) the following procedure can be followed.

One from among the loading/unloading stations (41, 42, 43) is identified, on which to process the full movable supporting platform (30) to be emptied.

First the pick up and transfer device (450) is brought to the loading/unloading station (41, 42, 43) identified and vertically aligned thereto, so that one tile (or tile plane) can be picked up at a time when located at the loading/unloading station (41, 42, 43) identified (at the top of the stack).

In a parallel way, a self-propelling carrier (20) can be identified to go and pick up a full movable supporting platform (30) (to be emptied) from a storage zone of the storage area of the storage warehouse (15).

Once the selected full movable supporting platform (30) has been collected the self-propelling carrier (20) is commanded to bring the full movable supporting platform (30) picked up at the identified loading/unloading station (41, 42, 43).

The pick up and transfer device (450) is commanded to transfer a tile or a tile plane (at a time), picked up from the top of the stack of tiles present on the loading plane (31) of the movable supporting platform (30) located in the identified loading/unloading station (41, 42, 43), to the loading/unloading line (L).

Progressively, as a tile (or tile plane) is unloaded from the loading plane (31) of the movable supporting platform (30), the latter is emptied.

When the unloading of the stack of tiles or tile planes present on the loading plane (31) of the lower movable supporting platform (30) is completed and the movable supporting platform (30) is empty, a self-propelling carrier (20) can be called to come and remove it from the relative loading/unloading station (41, 42, 43) in order for it to be placed in the storage warehouse (15), for example resting on the ground surface or at the top of a stack of (empty) movable supporting platforms (30) which define the shelving (freely resting on the ground surface).

During the steps, described in the foregoing, of loading of a movable supporting platform (30) (of any one loading/unloading station (41, 42, 43)), a (further) self-propelling carrier (20) can be identified to go and pick up a full movable supporting platform (30) from a storage zone of the storage area of the storage warehouse (15).

Once the selected full movable supporting platform (30) has been collected, the self-propelling carrier (20) is commanded to bring the collected full movable supporting platform (30) to the identified loading/unloading station (41, 42, 43) (for example while the first movable supporting platform (30) is emptying or has completed emptying).

At this point, the self-propelling carrier (20) that has brought the full movable supporting platform (30) can carry out the return run by taking away the first movable supporting platform (30) which has just been emptied.

In practice, when one from at least a first loading/unloading station (41), the second loading/unloading station (42) and the third loading/unloading station (43) is free (i.e. without the movable supporting platforms (30)) and the loading/unloading line (L) calls for tiles to be made available to the production line, the electronic control unit (100) is configured to command the carrying out of an unloading cycle of a full movable supporting platform (30) full of tiles onto the loading/unloading line (L) which comprises steps of:
- identifying a self-propelling carrier (20);
- commanding the identified self-propelling carrier (20) to lift a (determined) full movable supporting platform (30), i.e. loaded with tiles, from a storage zone of the storage area;
- commanding the identified self-propelling carrier (20) to transport the full movable supporting platform (30) collected into any one free station selected from among the first loading/unloading station (41), the second loading/unloading station (42) and the third loading/unloading station (43), and release them there;
- for example, it is possible to command (immediately or later) the transfer device (45) of the machine (40) to operate the transfer of the tiles from the full movable supporting platform (30), which has been released in the above-mentioned station, to the loading/unloading line (L); and
- (optionally) commanding, for example, contemporaneously with the activating of the transfer device (45), the indentified self-propelling carrier (20) to:
   - pick up a (full) movable supporting platform (30) from at least another station from among the first loading/unloading station (41), the second loading/unloading station (42) and the third loading/unloading station (43); and
   - transport the movable supporting platform (30) that has been picked up to a respective storage zone of the storage area and release it there.

The machine (40) might also be programmed in such a way as to pick up a tile (P) or a tile plane (P) (or more) from a movable supporting platform (30) located in any one of the loading/unloading stations (41, 42, 43), and a tile (P) or a tile plane (P) (or more) from a movable supporting platform (30) located in any one of the loading/unloading stations (41, 42, 43) in order to carry out a "recipe" including non-homogenous tile loads for despatch to be made available to the loading/unloading line (L).

In this case, the movable supporting platforms (30) can be brought and/or replaced in the various loading/unloading stations (41, 42, 43) according to the needs defined in the recipe.

The above-described work cycle is repeated as needed and the loading/unloading stations (41, 42, 43) can be identified in an alternating/selective way, with a saving in terms of runs of the self-propelling carrier (20) and the reduction of machine down times (40), as one of the loading/unloading station (41, 42, 43) (of the three) is always free to pick up a full movable supporting platform (30).

A full movable supporting platform (30) is always available, in practice, to the machine (40) before it is freed from the empty movable supporting platform (30) and with a single run of the self-propelling carrier (20) a change of the (empty/full) movable supporting platform (30) can be carried out.

During all the steps of storage and transport of the movable supporting platforms (30), the platforms can be selectively arranged resting on the support feet (32) (when resting on the ground surface (150)) and/or stacked to define the modular shelving described in the foregoing) or at the fork seats (312) when they are received from the forks (21) of the self-propelling carrier (20) or at the support zones (37) (when they are resting on the shelves (441, 442, 443) of the loading/unloading stations (41, 42, 43) of the machine (40).

In these three configurations, as mentioned in the foregoing, the movable supporting platform (30) flexes with an arc-shaped deformation with a single continuous curvature so as to minimise the risks of breakage and stresses on the tiles rested thereon.

More generally, instead of self-propelling carriers, movable transfer units can be used (not illustrated in the figures), each of which:
comprises fork means for lifting a stack of tiles directly or on a movable supporting platform, and for transporting the stack of tiles towards and from any one of the loading/unloading stations (41, 42, 43) of the machine (40);
is acting on an opposite side to the loading/unloading line (L) with respect to the plurality of loading/unloading stations (41, 42, 43) of the machine (40).

The invention as it is conceived is susceptible to numerous modifications, all falling within the scope of the inventive concept.

Further, all the details can be replaceable with other technically-equivalent elements.

In practice the materials used, as well as the contingent shapes and dimensions, can be any according to requirements, without forsaking the scope of protection of the following claims.

## Claims

1. A tile loading/unloading machine (40) comprising:
a tile loading/unloading line (L);
a plurality of loading/unloading stations (41, 42, 43) on which a tile, a tile plane or a stack of tiles is aimed at being temporarily arranged, directly or on a movable supporting platform (30), and which are vertically aligned to one another along a vertical stacking direction at a reciprocal distance that is non-zero; and
a transfer device (45) configured to operate the transfer of the tiles, preferably one tile or a tile plane at a time, between the tile loading/unloading line (L) and any one from among the loading/unloading stations (41, 42, 43).

2. The machine (40) of claim 1, wherein the plurality of loading/unloading stations (41, 42, 43) stacked along the vertical stacking direction is flanked to the loading/unloading line (L) along a horizontal flanking direction, with the transfer device (45) comprising a pick up and transfer device (450) movable at least along a horizontal direction parallel to the flanking direction.

3. The machine (40) of claim 2, wherein the horizontal flanking direction is orthogonal to the sliding direction of the tiles on the loading/unloading line (L).

4. The machine (40) of claim 2 or 3, wherein the pick up and transfer device (450) is also movable along a vertical direction to be located vertically aligned in plan view selectively above the tile loading/unloading line (L) and above any one from among the loading/unloading stations (41,42,43).

5. The machine (40) of claim 1, wherein the transfer device (45) comprises at least a pick up and transfer device (450) having a suction cup or a suction plane for gripping/releasing a tile or a tile plane formed by a plurality of horizontally flanked tiles.

6. The machine (40) of claim 1, wherein each movable supporting platform (30) is constituted by a bench provided with support feet (32) on a ground surface and a loading plane (31) arranged raised from the ground surface, preferably arranged at a top of the support feet (32), or by a support slab.

7. The machine (40) of claim 1, which comprises a portal frame (44), to vertical uprights (440) of which are rigidly attached:
- a plurality of shelves (441, 442, 443), each defining a respective loading/unloading station (41, 42, 43), wherein the shelves (441, 442, 443) are vertically aligned with each other and placed at a non-zero distance from each other.

8. The machine (40) of claim 7, wherein the portal frame (44) can be crossed along a crossing direction and has a first end facing the transfer device (45) and/or the tile loading/unloading line (L) and a second end that is opposite and aligned with the first end along the flanking direction for access to any one loading/unloading station (41, 42, 43).

9. The machine (40) of claim 7, preferably in connection with claim 6, wherein the shelves (441, 442, 443) comprise, in proximity of or with the free end thereof distal from the respective upright (440), a respective elevating body (444) configured to define a raised rest for the movable supporting platform (30), preferably in such a way that the elevating body (444) is the only part of the shelf (441, 442, 443) in contact with the movable supporting platform (30) exclusively at the support zone (37).

10. The machine (40) of claim 1, wherein any one of the loading/unloading stations (41, 42, 43) or each thereof can be opened/closed by means of a closing and protective element (460).

11. The machine (40) according to claim 10, wherein the closing and protective element (460) comprises at least a shutter, preferably a sectional shutter, configured to be switched between a closed position, in which it closes each loading/unloading station (41, 42, 43), and at least an open position in which it selectively opens at least one loading/unloading station (41, 42, 43) of the plurality of loading/unloading stations (41, 42, 43).

12. The machine (40) of claim 8 and 11, wherein the closing and protective element (460) is arranged at/in proximity of the second end of the portal frame (44).

13. The machine (40) of claim 1, wherein the transfer device (45) comprises a Cartesian robot or an anthropomorphic robot.

14. A tile storage system (10) comprising:
a storage area configured to store a plurality of movable supporting platforms (30), each in a respective storage zone of the storage area;
at least a loading/unloading machine (40) according to claim 1, and
at least a self-propelling carrier (20) configured to move at least within the storage area, wherein the self-propelling carrier (20) is configured to transport a tile, a tile plane or a stack of tiles, either directly or on a movable supporting platform (30), between a storage zone of the storage area and any one loading/unloading station (41, 42, 43) of the machine (40).

15. A tile storage system (10) comprising:
at least a loading/unloading machine (40) according to claim 1, and
at least a movable transfer unit which:
in turn comprises fork means for lifting a stack of tiles, directly or on a movable supporting platform, and for transporting the stack of tiles towards and from any loading/unloading station (41, 42, 43) of the machine (40);
acts on an opposite side to the loading/unloading line (L) with respect to the plurality of loading/unloading stations (41, 42, 43) of the machine (40).
